(19) Europäisches Patentamt
European Patent Office
Office européen des brevets

(11) EP 4 625 348 A1

(12) **EUROPEAN PATENT APPLICATION**

(43) Date of publication:
**01.10.2025 Bulletin 2025/40**

(21) Application number: **25163157.8**

(22) Date of filing: **12.03.2025**

(51) International Patent Classification (IPC):
***G06V 10/42*** *(2022.01)*

(52) Cooperative Patent Classification (CPC):
**G06V 10/431**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **25.03.2024 JP 2024048436**

(71) Applicant: **SCREEN Holdings Co., Ltd.**
**Kyoto-shi, Kyoto 602-8585 (JP)**

(72) Inventor: **YASUDA, Takuya**
**Kyoto, 602-8585 (JP)**

(74) Representative: **Goddar, Heinz J.**
**Boehmert & Boehmert**
**Anwaltspartnerschaft mbB**
**Pettenkoferstrasse 22**
**80336 München (DE)**

(54) **REGION DETECTING METHOD, COMPUTER PROGRAM, AND REGION DETECTING DEVICE**

(57) A region detecting method detects, from a detection object image (60), a target region corresponding to a reference image (50). The region detecting method includes a step (S2) of hierarchizing the reference image (50) into N hierarchies by processing using different reduction rates and generating a plurality of reference hierarchical images (50n), a step (S3) of calculating a first frequency information (71) from each of the plurality of reference hierarchical images (50n), a step (S4) of hierarchizing the detection object image (60) into N hierarchies by processing using different reduction rates and generating a plurality of object hierarchical images (60n), a step (S5) of calculating a second frequency information (81) from each of the plurality of object hierarchical images (60n), a step (S6) of comparing the respective second frequency information (81) of the plurality of object hierarchical images (60n) and the respective first frequency information (71) of the plurality of reference hierarchical images (50n), and a step (S7) of detecting, from the detection object image (60), the target region corresponding to the reference image (50) based on the comparison result.

FIG. 12

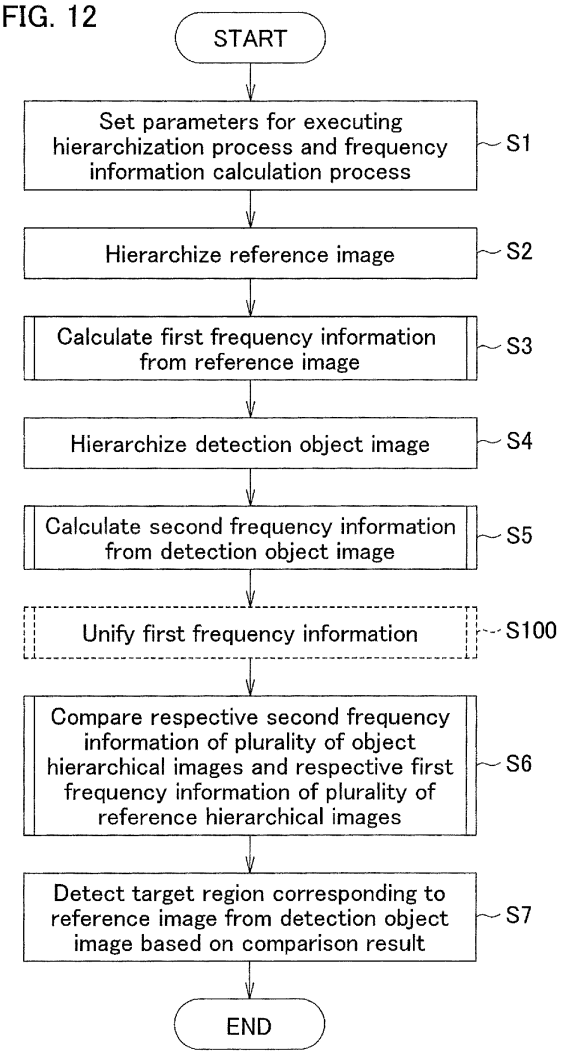


EP 4 625 348 A1

## Description

BACKGROUND OF THE INVENTION

1. Field of the Invention

The present invention relates to a region detecting method, a computer program, and a region detecting device.

2. Description of the Related Art

An image processing device disclosed in WO 2008/139825 includes a DCT coefficient acquiring portion, a DCT feature amount generating portion, and a region identifying portion. The DCT coefficient acquiring portion decompresses compressed image data of an in-vivo image as a compressed image and acquires a plurality of DCT coefficients calculated by the decompression process for each unit pixel block processed by DCT encoding during compression. The DCT feature amount generating portion generates, for each unit pixel block, a multidimensional DCT feature amount as a feature amount of multiple dimensions constituted using the plurality of DCT coefficients. The region identifying portion performs, on the basis of the plurality of DCT coefficients for each unit pixel block, a region identification of image regions corresponding to the DCT coefficients within the in-vivo image as a processing object image that has been restored (hereinafter referred to as the restored in-vivo image). In particular, the region identifying portion performs, on the basis of the multidimensional DCT feature amounts generated by the DCT feature amount generating portion for each unit pixel block, the region identification of the image region corresponding to the multidimensional DCT feature amounts in the restored in-vivo image.

SUMMARY OF THE INVENTION

However, with the image processing device described in WO 2008/139825, processing is merely executed for each unit pixel block. Therefore, features of wide ranges are not reflected in the results of the region identification. Precision of the region identification may thus be insufficient. For example, there may be a case where precision in detecting a target region from a detection object image is insufficient.

Example embodiments of the present invention provide a region detecting method, a computer program, and a region detecting device by which a target region can be detected with high precision from a detection object image.

According to an example embodiment of the present invention, a region detecting method detects, from a detection object image, a target region corresponding to a reference image. The region detecting method includes a step of hierarchizing the reference image into N hierarchies (where N is an integer not less than 2) by processing using different reduction rates and generating a plurality of reference hierarchical images, a step of calculating a first frequency information from each of the plurality of reference hierarchical images, a step of hierarchizing the detection object image into N hierarchies by processing using different reduction rates and generating a plurality of object hierarchical images, a step of calculating a second frequency information from each of the plurality of object hierarchical images, a step of comparing the respective second frequency information of the plurality of object hierarchical images and the respective first frequency information of the plurality of reference hierarchical images, and a step of detecting, from the detection object image, the target region corresponding to the reference image based on a comparison result of the step of comparing.

In an example embodiment, preferably, in the step of comparing, the second frequency information of the object hierarchical image and the first frequency information of the reference hierarchical image are compared in the same hierarchy.

In an example embodiment, preferably, the step of calculating the first frequency information includes a step of acquiring a single or a plurality of reference block images from each of the plurality of reference hierarchical images and a step of calculating the first frequency information from each of the reference block images. Preferably, the step of calculating the second frequency information includes a step of acquiring a single or a plurality of object block images of the same size as the reference block images from each of the plurality of object hierarchical images and a step of calculating the second frequency information from each of the object block images.

In an example embodiment, preferably, the step of comparing includes a step of calculating matching degrees of the second frequency information of the object block images and the first frequency information of the reference block images, a step of allocating the matching degrees to pixel regions of the same size as the object block images and calculating, for each hierarchy, a matching degree image region constituted of a plurality of the pixel regions, a step of calculating, for each hierarchy, a magnified matching degree region with which the matching degree image region is magnified to the same size as the detection object image, and a step of calculating a synthesized matching degree region in which the plurality of magnified matching degree regions obtained for each hierarchy are synthesized. Preferably, in the step of detecting the target region, the target region is detected from the detection object image based on the synthesized matching degree region.

In an example embodiment, preferably, the step of comparing includes a step of calculating, for each hierarchy, matching degrees of the second frequency information of the object block images and the first frequency information of the reference block images. Preferably, the step of calculating the matching degrees includes a step of dividing each of the first frequency information into a plurality of first frequency regions in accordance with a frequency characteristic, a step of calculating, for each of the plurality of first frequency regions, a first feature amount indicating a feature of the first frequency region, a step of dividing each of the second frequency information into a plurality of second frequency regions in accordance with a frequency characteristic, a step of calculating, for each of the plurality of second frequency regions, a second feature amount indicating a feature of the second frequency region, a step of comparing the first feature amount and the second feature amount and calculating, based on the comparison result, a feature amount matching degree indicating a matching degree of the first feature amount and the second feature amount, and a step of calculating, for each second frequency information of the object block image, the matching degree of the second frequency information and the first frequency information based on a plurality of the feature amount matching degrees.

In an example embodiment, preferably, each of the first feature amounts and the second feature amounts includes a DC component information and an AC component information. Preferably, in the step of calculating the feature amount matching degree, the feature amount matching degree is calculated based on a matching degree of the DC component information of the first feature amount and the DC component information of the second feature amount, and a matching degree of the AC component information of the first feature amount and the AC component information of the second feature amount.

In an example embodiment, the region detecting method further includes a step of calculating, when a plurality of the first frequency information are present in the same hierarchy, a matching degree among the plurality of first frequency information, and a step of unifying, based on the matching degree among the plurality of first frequency information, two or more of the plurality of first frequency information in the plurality of first frequency information and setting a new first frequency information.

In an example embodiment, preferably, the plurality of reference hierarchical images include a reduced image with which the reference image is reduced. In the step of generating the reference hierarchical images, when the reference image is reduced, preferably, a plurality of reduction starting pixels at which a reduction process at the same reduction rate is started are set from among a plurality of pixels constituting the reference image and the reduced image of the same hierarchy is generated for each of the reduction starting pixels. Preferably, the plurality of object hierarchical images include a reduced image with which the detection object image is reduced. In the step of generating the object hierarchical images, when the detection object image is reduced, preferably, a plurality of reduction starting pixels at which a reduction process at the same reduction rate is started are set from among a plurality of pixels constituting the detection object image and the reduced image of the same hierarchy is generated for each of the reduction starting pixels.

In an example embodiment, preferably, in the step of acquiring the reference block images, for each reference block image, a calculation starting pixel at which a calculation process of the first frequency information is started is set and a new reference block image having a pixel differing from the calculation starting pixel as a new calculation starting pixel is acquired. Preferably, in the step of acquiring the object block images, for each object block image, a calculation starting pixel at which a calculation process of the second frequency information is started is set and a new object block image having a pixel differing from the calculation starting pixel as a new calculation starting pixel is acquired.

In an example embodiment, the region detecting method preferably further includes a step of setting, based on a texture indicated by the reference image, a number of hierarchizations in hierarchizing the detection object image and the reference image, reduction rates for each hierarchy in hierarchizing the detection object image and the reference image, and sizes of the object block images and the reference block images.

According to another example embodiment of the present invention, a computer program makes a computer execute the region detecting method described above.

In an example embodiment, the computer program is stored in a storage medium that is computer readable. The storage medium is preferably a non-transitory computer readable medium.

According to yet another example embodiment of the present invention, a region detecting device detects, from a detection object image, a target region corresponding to a reference image. The region detecting device includes a first hierarchizing portion, a first frequency information calculating portion, a second hierarchizing portion, a second frequency information calculating portion, a comparing portion, and a detecting portion. The first hierarchizing portion hierarchizes the reference image into N hierarchies (where N is an integer not less than 2) by processing using different reduction rates and generates a plurality of reference hierarchical images. The first frequency information calculating portion calculates a first frequency information from each of the plurality of reference hierarchical images. The second hierarchizing portion hierarchizes the detection object image into the N hierarchies by processing using different reduction rates and generates a plurality of object hierarchical images. The second frequency information calculating portion calculates a second frequency information from each of the plurality of object hierarchical images. The comparing portion compares the respective second frequency information of the plurality of object hierarchical images and the respective first frequency information of the plurality of reference hierarchical images. The detecting portion detects, from the detection object image, the target region corresponding to the reference image based on a result of comparison by the comparing portion.

The above and other elements, features, steps, characteristics and advantages of the present invention will become more apparent from the following detailed description of the preferred embodiments with reference to the attached drawings.

BRIEF DESCRIPTION OF THE DRAWINGS

FIG. 1 is a block diagram showing a region detecting device according to an example embodiment of the present invention.

FIG. 2(a) is a diagram showing an example of a reference image and a hierarchization process of the reference image according to the example embodiment. FIG. 2(b) is a diagram showing an example of a detection object image and a hierarchization process of the detection object image according to the example embodiment.

FIG. 3(a) is a diagram showing an example of a frequency information calculation process of reference hierarchical images according to the example embodiment.

FIG. 3(b) is a diagram showing an example of a frequency information calculation process of object hierarchical images according to the example embodiment.

FIG. 4 is a diagram showing an example of a matching degree calculation process according to the example embodiment.

FIG. 5 is a diagram showing an example of a magnification process according to the example embodiment.

FIG. 6 is a diagram showing an example of a synthesis process according to the example embodiment.

FIG. 7 is a diagram showing an example of a region division process of second frequency information in the matching degree calculation process of the example embodiment.

FIG. 8 is a diagram showing an example of a calculation process of second feature amounts in the matching degree calculation process of the example embodiment.

FIG. 9 is a diagram showing an example of a region division process of first frequency information in the matching degree calculation process of the example embodiment.

FIG. 10 is a diagram showing an example of a calculation process of first feature amounts in the matching degree calculation process of the example embodiment.

FIG. 11 is a diagram showing an example of a calculation process of feature amount matching degrees and a matching degree in the matching degree calculation process of the example embodiment.

FIG. 12 is a flowchart showing an example of a region detecting method according to the example embodiment.

FIG. 13 is a flowchart showing an example of step S3 of FIG. 12.

FIG. 14 is a flowchart showing an example of step S5 of FIG. 12.

FIG. 15 is a flowchart showing an example of step S6 of FIG. 12.

FIG. 16 is a flowchart showing an example of step S61 of FIG. 15.

FIG. 17(a) is a diagram showing an example of a reduction starting pixel in the hierarchization process according to a first modification of the example embodiment.

FIG. 17(b) is a diagram showing a shifted example of the reduction starting pixel in the hierarchization process according to the first modification.

FIG. 18(a) is a diagram showing an example of a calculation starting pixel in the frequency information calculation process according to a second modification of the example embodiment. FIG. 18(b) is a diagram showing a shifted example of the calculation starting pixel in the frequency information calculation process according to the second modification.

FIG. 19 is a flowchart showing an example of a unification process according to a third modification of the example embodiment.

FIG. 20 is a flowchart showing an example of step S101 of FIG. 19.

DETAILED DESCRIPTION OF THE EXAMPLE EMBODIMENTS

An example embodiment of the present invention shall now be described with reference to the drawings. Here, portions that are the same or are corresponding equivalent in the figures shall be provided with the same reference symbols and description shall not be repeated.

A region detecting device 1 according to the example embodiment of the present invention shall be described with reference to FIG. 1 to FIG. 16. The region detecting device 1 detects a target region corresponding to a reference image 50 (FIG. 2(a)) from a detection object image 60 (FIG. 2(b)).

FIG. 1 is a block diagram showing the region detecting device 1. As shown in FIG. 1, the region detecting device 1 includes a processing portion 3, a storage portion 5, an input portion 7, and a display portion 9. The region detecting device 1 is, for example, a computer.

The processing portion 3 includes a processor such as a CPU (central processing unit), a GPU (graphics processing unit), etc. The storage portion 5 includes a storage device and stores data and a computer program. The processor of the processing portion 3 executes the computer program stored in the storage device of the storage portion 5 and executes various processes.

For example, the storage portion 5 includes a main storage device such as a semiconductor memory, etc., and an auxiliary storage device such as a semiconductor memory, a hard disk drive, etc. The storage portion 5 may include a removable medium such as an optical disk, etc. The storage portion 5 is, for example a computer readable medium and is typically a non-transitory computer readable medium.

The processing portion 3 includes a parameter setting portion 31, a first hierarchizing portion 32, a first frequency information calculating portion 33, a second hierarchizing portion 34, a second frequency information calculating portion 35, a comparing portion 36, and a detecting portion 37. The processing portion 3 preferably further includes a unifying portion 38. The unifying portion 38 shall be described later with a third modification.

Specifically, the processing portion 3 functions as the parameter setting portion 31, the first hierarchizing portion 32, the first frequency information calculating portion 33, the second hierarchizing portion 34, the second frequency information calculating portion 35, the comparing portion 36, and the detecting portion 37 by executing the computer program stored in the storage portion 5. Also, the processing portion 3 preferably functions as the unifying portion 38 by executing the computer program stored in the storage portion 5.

The input portion 7 is an input device for inputting various information into the processing portion 3. The input portion 7 is, for example, a keyboard and a pointing device or a touch panel.

The display portion 9 displays images. The display portion 9 is, for example, a liquid crystal display or an organic electroluminescence display.

Next, the reference image 50 and the detection object image 60 that are objects of processing of the region detecting device 1 shall be described with reference to FIG. 2(a) and FIG. 2(b). FIG. 2(a) is a diagram showing an example of the reference image 50. FIG. 2(b) is a diagram showing an example of the detection object image 60.

As shown in FIG. 2 (a), the reference image 50 shows a texture 55 of an object of detection by the region detecting device 1. The region detecting device 1 detects the target region corresponding to the reference image 50 (the texture 55) from the detection object image 60 shown in FIG. 2(b). Specifically, the region detecting device 1 detects the target region proximate to the reference image 50 (the texture 55) from the detection object image 60. As shown in FIG. 2(b), the detection object image 60 includes textures 65, 66, and 67. Among the textures 65, 66, and 67, the texture 65 that is proximate to the reference image 50 (the texture 55) corresponds to the target region.

In this example embodiment, the region detecting device 1 executes a parameter setting process, a hierarchization process, a frequency information calculation process, a comparison process (a matching degree calculation process, a magnification process, and a synthesis process), and a detection process as processes for detecting the target region corresponding to the reference image 50 from the detection object image 60. Details of the respective processes shall be described below.

The hierarchization process and the parameter setting process shall be described with continuing reference to FIG. 1, FIG. 2(a), and FIG. 2(b).

FIG. 2(a) shows an example of the hierarchization process of the reference image 50. As shown in FIG. 1 and FIG. 2(a), the first hierarchizing portion 32 hierarchizes the reference image 50 into N hierarchies by processing using different reduction rates and generates a plurality of reference hierarchical images 50n. In the example of FIG. 2(a), reference hierarchical images 501 to 503 are generated.

The reduction rates are real number not more than 1. That a reduction rate is "1" indicates being of unit magnification and not reduced nor magnified (namely, the same size). The smaller the reduction rate, the smaller the reference hierarchical image 50n obtained by reduction. In this description, "N" indicates an integer not less than 2. In the example of FIG. 2(a), N = 3. Also, in this description, "n" is an integer not less than 1.

For example, the reduction rate is indicated by a value obtained by dividing the number of pixels in a vertical direction of the reference hierarchical image 50n by the number of pixels in the vertical direction of the reference image 50 and a value obtained by dividing the number of pixels in a horizontal direction of the reference hierarchical image 50n by the number of pixels in the horizontal direction of the reference image 50.

By the hierarchization process by the first hierarchizing portion 32, a plurality of hierarchies hn are formed. In the example of FIG. 2(a), the hierarchies h1 to h3 are formed.

The plurality of reference hierarchical images 50n include reduced images with which the reference image 50 is reduced. In the example of FIG. 2(a), the reference hierarchical images 501 and 502 are the reduced images. Also, the plurality of reference hierarchical images 50n include a unit magnification image with which the reference image 50 is not reduced. The reference hierarchical image 503 is the unit magnification image.

FIG. 2(b) is a diagram showing an example of the hierarchization process of the detection object image 60. As shown in FIG. 1 and FIG. 2(b), the second hierarchizing portion 34 hierarchizes the detection object image 60 into N hierarchies by processing using different reduction rates and generates a plurality of object hierarchical images 60n. In the example of FIG. 2(b), object hierarchical images 601 to 603 are generated.

The reduction rates are real number not more than 1. That a reduction rate is "1" indicates being of unit magnification and not reduced nor magnified (namely, the same size). In the example of FIG. 2(b), N = 3. For example, the reduction rate is indicated by a value obtained by dividing the number of pixels in the vertical direction of the object hierarchical image 60n by the number of pixels in the vertical direction of the detection object image 60 and a value obtained by dividing the number of pixels in the horizontal direction of the object hierarchical image 60n by the number of pixels in the horizontal direction of the detection object image 60.

By the hierarchization process by the second hierarchizing portion 34, a plurality of hierarchies hn are formed. In the example of FIG. 2(b), the hierarchies h1 to h3 are formed.

The plurality of object hierarchical images 60n include reduced images with which the detection object image 60 is reduced. In the example of FIG. 2(b), the object hierarchical images 601 and 602 are the reduced images. Also, the plurality of object hierarchical images 60n include a unit magnification image with which the detection object image 60 is not reduced. The object hierarchical image 603 is the unit magnification image.

Before the hierarchization processes by the first hierarchizing portion 32 and the second hierarchizing portion 34 are executed, the parameter setting portion 31 sets, on the basis of the size of the texture 55 of the detection object, the number of hierarchizations N when hierarchizing the detection object image 60 and the reference image 50 and the reduction rates for each hierarchy hn when hierarchizing the detection object image 60 and the reference image 50.

The first hierarchizing portion 32 thus generates the plurality of reference hierarchical images 50n from the reference image 50 in accordance with the number of hierarchizations N and the reduction rates set by the parameter setting portion 31. Also, the second hierarchizing portion 34 generates the plurality of object hierarchical images 60n from the detection object image 60 in accordance with the number of hierarchizations N and the reduction rates set by the parameter setting portion 31.

The number of hierarchizations N by the first hierarchizing portion 32 and the number of hierarchizations N by the second hierarchizing portion 34 are the same. The reduction rates by the first hierarchizing portion 32 and the reduction rates by the second hierarchizing portion 34 are the same.

Here, if a reduction rate set by the parameter setting portion 31 is less than 1, the first hierarchizing portion 32 reduces the reference image 50 and the second hierarchizing portion 34 reduces the detection object image 60. Also, if a reduction rate set by the parameter setting portion 31 is 1, the first hierarchizing portion 32 magnifies the reference image 50 by one and the second hierarchizing portion 34 magnifies the detection object image 60 by one.

Next, the frequency information calculation process shall be described with reference to FIG. 1, FIG. 3(a), and FIG. 3(b). In this example embodiment, the frequency information calculation process is, as an example, a discrete cosine transform (DCT) process.

FIG. 3(a) is a diagram showing an example of the frequency information calculation process of the reference hierarchical images 50n. FIG. 3(b) is a diagram showing an example of the frequency information calculation process of the object hierarchical images 60n.

As shown in FIG. 1 and FIG. 3(a), the first frequency information calculating portion 33 calculates a first frequency information 71 from each of the plurality of reference hierarchical images 50n. That is, the first frequency information calculating portion 33 calculates the first frequency information 71 for each hierarchy hn. As an example, the first frequency information 71 is a DCT coefficient set constituted of a plurality of DCT coefficients.

Specifically, the first frequency information calculating portion 33 acquires a single or a plurality of reference block images 54 from each of the plurality of reference hierarchical images 50n. A size of each reference block image 54 is "M pixels $\times$ K pixels." In this example embodiment, M = K. Also, each of "M" and "K" is an integer not less than 2. As an example, M = K = 8.

For example, a single reference block image 54 is acquired from the reference hierarchical image 501, four reference block images 54 are acquired from the reference hierarchical image 502, and nine reference block images 54 are acquired from the reference hierarchical image 503.

The first frequency information calculating portion 33 calculates the first frequency information 71 from each of the reference block images 54. That is, the first frequency information calculating portion 33 calculates the first frequency information 71 for each hierarchy hn and for each reference block image 54. Each first frequency information 71 includes a plurality of first frequency elements. Specifically, the first frequency information 71 includes "M$\times$K" first frequency elements.

As an example, the first frequency information calculating portion 33 executes the DCT process on a reference block image 54 and calculates a first frequency information 71 that is a DCT coefficient set. In this case, each first frequency element constituting the first frequency information 71 is a DCT coefficient.

The parameter setting portion 31 sets the size of the reference block image 54 before the first frequency information calculating portion 33 executes the frequency information calculation process. Therefore, the first frequency information calculating portion 33 acquires the reference block image 54 of the size set by the parameter setting portion 31 and calculates the first frequency information 71. For example, the size of the reference block image 54 is indicated by the number of pixels in the horizontal direction and the vertical direction.

As shown in FIG. 1 and FIG. 3(b), the second frequency information calculating portion 35 calculates a second frequency information 81 from each of the plurality of object hierarchical images 60n. That is, the second frequency information calculating portion 35 calculates the second frequency information 81 for each hierarchy hn.

Specifically, the second frequency information calculating portion 35 acquires a single or a plurality of object block images 64 from each of the plurality of object hierarchical images 60n. A size of each object block image 64 is "M pixels × K pixels."

For example, four object block images 64 are acquired from the object hierarchical image 601, 16 object block images 64 are acquired from the object hierarchical image 602, and 36 object block images 64 are acquired from the object hierarchical image 603.

The second frequency information calculating portion 35 calculates the second frequency information 81 from each of the object block images 64. That is, the second frequency information calculating portion 35 calculates the second frequency information 81 for each hierarchy hn and for each object block image 64. Each second frequency information 81 includes a plurality of second frequency elements. Specifically, the second frequency information 81 includes "M×K" second frequency elements.

As an example, the second frequency information calculating portion 35 executes the DCT process on an object block image 64 and calculates a second frequency information 81 that is a DCT coefficient set. In this case, each second frequency element constituting the second frequency information 81 is a DCT coefficient.

The parameter setting portion 31 sets the size of the object block image 64 before the second frequency information calculating portion 35 executes the frequency information calculation process. Therefore, the second frequency information calculating portion 35 acquires the object block image 64 of the size set by the parameter setting portion 31 and calculates the second frequency information 81. For example, the size of the object block image 64 is indicated by the number of pixels in the horizontal direction and the vertical direction.

The comparing portion 36 compares each second frequency information 81 of the plurality of object hierarchical images 60n and each first frequency information 71 of the plurality of reference hierarchical images 50n. The comparison process includes the matching degree calculation process, the magnification process, and the synthesis process.

Next, the matching degree calculation process that constitutes the comparison process shall be described with reference to FIG. 1 and FIG. 4. FIG. 4 is a diagram showing an example of the matching degree calculation process. As shown in FIG. 1 and FIG. 4, the comparing portion 36 calculates matching degrees C# of the first frequency information 71 of the reference block images 54 and the second frequency information 81 of the object block images 64 for each hierarchy hn. Each matching degree C# is indicated, for example, by a numerical value. In this example embodiment, the greater the matching degree C#, the more proximate the first frequency information 71 and the second frequency information 81.

Specifically, the comparing portion 36 calculates the matching degrees C# of all second frequency information 81 and all first frequency information 71 in the same hierarchy hn. In this case, the comparing portion 36 compares each second frequency information 81 with all first frequency information 71 in the same hierarchy hn. For example, for hierarchy h2, the comparing portion 36 compares each second frequency information 81 with the four first frequency information 71. The comparing portion 36 then calculates the matching degree C# for each second frequency information 81 based on the comparison result.

When Q second frequency information 81 (Q object block images 64) are present in the same hierarchy hn, the comparing portion 36 calculates Q matching degrees C# in the same hierarchy hn. "Q" is an integer not less than 1. For example, since 16 second frequency information 81 are present in the hierarchy h2, 16 matching degrees C# are calculated.

As described with reference to FIG. 4, the comparing portion 36 compares each second frequency information 81 belonging to the same hierarchy hn with all of the first frequency information 71 belonging to the same hierarchy hn to calculate the matching degrees C# for the number of second frequency information 81 belonging to the same hierarchy hn. Consequently, the matching degrees C# are obtained for each hierarchy hn and for each second frequency information 81. Detection precision of the target region can thus be improved further.

Further, the comparing portion 36 allocates the matching degrees C# to pixel regions 91 of the same size as the object block images 64 (FIG. 3(b)) to calculate matching degree image regions 92 each constituted of a plurality of pixel regions 91 for each hierarchy hn. The pixel regions 91 can be regarded as being pixels. Here, in FIG. 4, gaps are provided between the pixel regions 91 to make the diagram perspicuous.

For example, with the hierarchy h2, since 16 object block images 64 (see FIG. 3(b)) are present, the comparing portion 36 prepares 16 pixel regions 91. The comparing portion 36 then allocates 16 matching degrees C# to the 16 pixel regions 91 respectively. Consequently, the matching degree image region 92 constituted of the 16 pixel regions 91 are formed for the hierarchy h2.

Next, the magnification process that constitutes the comparison process shall be described with reference to FIG. 1 and FIG. 5. FIG. 5 is a diagram showing an example of the magnification process. As shown in FIG. 1 and FIG. 5, the comparing portion 36 calculates a magnified matching degree region 101 with which the matching degree image region 92 is magnified to the same size as the detection object image 60 (FIG. 2(b)) for each hierarchy hn. In FIG. 5, in each of the magnified matching degree regions 101, the closer a region is to a white color, the higher the matching degree C#. Therefore, in each of the magnified matching degree regions 101, that a region is closer to the white color indicates that it is more proximate to the reference image 50 (FIG. 2(a)).

Specifically, the comparing portion 36 interpolates pixels to magnify the matching degree image region 92 to the same size as the detection object image 60. For example, the comparing portion 36 executes a nearest neighbor interpolation, a bilinear interpolation, or a bicubic interpolation to magnify the matching degree image region 92 and calculate the magnified matching degree region 101.

Next, the synthesis process and the detection process that constitute comparison process shall be described with reference to FIG. 1 and FIG. 6. FIG. 6 is a diagram showing an example of the synthesis process. As shown in FIG. 1 and FIG. 6, the comparing portion 36 calculates a synthesized matching degree region 102 with which the plurality of magnified matching degree regions 101 obtained for each hierarchy hn are synthesized. In the synthesized matching degree region 102 in FIG. 6, the closer a region is to the white color, the higher the matching degree C#. Therefore, in the synthesized matching degree region 102, that a region is closer to the white color indicates that it is more proximate to the reference image 50 (FIG. 2(a)).

Specifically, the comparing portion 36 calculates, among the plurality of magnified matching degree regions 101, an average value of pixel values of a plurality of pixels positioned at the same coordinates. The comparing portion 36 sets the average value as the pixel value of the pixel positioned at the same coordinates in the synthesized matching degree region 102. When each of the magnified matching degree regions 101 is constituted of U pixels $\times$ V pixels, the comparing portion 36 calculates the average value among the plurality of magnified matching degree regions 101 for each of the $(U \times V)$ pixels.

In calculating the average value, the comparing portion 36 executes arithmetic averaging or weighted averaging. When the comparing portion 36 executes the weighted averaging, a larger weight is set for the magnified matching degree region 101 belonging to the hierarchy hn of greater reduction rate in the hierarchization process.

Based on the synthesized matching degree region 102, the detecting portion 37 detects the target region corresponding to the reference image 50 (the texture 55) from the detection object image 60 (FIG. 2 (b)). That is, the detecting portion 37 detects the target region that is proximate to the reference image 50 (the texture 55) from the detection object image 60 based on the synthesized matching degree region 102.

For example, the detecting portion 37 detects, as the target region, a region of pixels in the synthesized matching degree region 102 to which the matching degrees C# of not less than a threshold TH1 have been assigned.

As described above with reference to FIG. 1 to FIG. 6, according to the example embodiment, the first hierarchizing portion 32 generates the plurality of reference hierarchical images 50n from the reference image 50. The first frequency information calculating portion 33 then calculates the plurality of first frequency information 71 from the respective reference hierarchical images 50n. On the other hand, the second hierarchizing portion 34 generates the plurality of object hierarchical images 60n from the detection object image 60. The second frequency information calculating portion 35 then calculates the plurality of second frequency information 81 from the respective object hierarchical images 60n. Further, the comparing portion 36 compares the respective second frequency information 81 of the plurality of object hierarchical images 60n and the respective first frequency information 71 of the plurality of reference hierarchical images 50n. Then, based on the comparison result, the comparing portion 36 detects the target region corresponding to the reference image 50 from the detection object image 60.

Therefore, according to the example embodiment, the frequency information are compared among the plurality of reference hierarchical images 50n and the plurality of object hierarchical images 60n. That is, the frequency information are compared across a wide range in the plurality of hierarchies hn. Consequently, the target region can be detected with high precision from the detection object image 60 in comparison to a case where processing is executed only with unit pixel blocks of the DCT process.

Also, as described with reference to FIG. 2(a), FIG. 2(b), FIG. 3(a), and FIG. 3(b), according to the example embodiment, the parameter setting portion 31 can set the number of hierarchizations N, the reduction rates for each hierarchy hn, and the size (block size) of the object block images 64 and the reference block images 54 based on the texture 55 indicated by the reference image 50. The number of hierarchizations N, the reduction rates, and the block size that are optimal for the targeted texture 55 can thus be set.

In particular, as described with reference to FIG. 3(a) and FIG. 3(b), according to the example embodiment, the size of the reference block image 54 that is a unit of processing in calculating the first frequency information 71 and the size of the object block image 64 that is a unit of processing in calculating the second frequency information 81 are set to be the same. Therefore, the comparison process of the first frequency information 71 and the second frequency information 81 can be simplified and a processing speed can be improved.

Also, as described with reference to FIG. 4, according to the example embodiment, the comparing portion 36 compares the second frequency information 81 of the object hierarchical image 60n and the first frequency information 71 of the reference hierarchical image 50n in the same hierarchy hn. Processing can thus made high in speed in comparison to a case executing comparison with different hierarchies hn.

Further, as described with reference to FIG. 5, according to the example embodiment, the comparing portion 36 calculates the matching degree image regions 92, each constituted of the pixel regions 91 to which are assigned the matching degrees C# of the second frequency information 81 and the first frequency information 71, for each hierarchy hn. The comparing portion 36 then magnifies the matching degree image regions 92 and calculates the magnified matching degree region 101 for each hierarchy hn. Further, the comparing portion 36 synthesizes the magnified matching degree region 101 of the plurality of hierarchies hn and calculates the synthesized matching degree region 102. The detecting portion 37 then detects the target region proximate to the reference image 50 from the detection object image 60 based on the synthesized matching degree region 102. That is, according to the example embodiment, the detecting portion 37 detects the target region based on the synthesized matching degree region 102 in which are reflected the matching degrees C# of the plurality of hierarchies hn. Consequently, the target region can be detected with even higher precision from the detection object image 60.

Next, details of the matching degree calculation process shall be described with reference to FIG. 1 and FIG. 7 to FIG. 11. FIG. 7 is a diagram showing an example of a region division process of the second frequency information 81 in the matching degree calculation process. As shown in FIG. 7, for convenience of description, in the hierarchy h2, the second frequency information 81 at the upper right corner in the figure is referred to at times as the second frequency information 811.

As shown in FIG. 1 and FIG. 7, the comparing portion 36 divides each of the second frequency information 81 into a plurality of second frequency regions B[j][i] in accordance with a frequency characteristic. In the example of FIG. 7, the comparing portion 36 divides the second frequency information 811 into four second frequency regions B[j][0] to B[j][3]. The number of divisions m is not restricted in particular as long as it is not less than 2. In the example of FIG. 7, m = 4. The second frequency regions B[j][i] are indicated by dot hatching in the figure. The second frequency regions B[j][0] to B[j][3] constitute a second divided region set 100[j].

In this description, "j" indicates an integer not less than 1 and is a consecutive number starting from "1" for identifying a second frequency information 81 in a hierarchy hn. In the example of FIG. 7, j = 1 to 16 in the hierarchy h2. For example, the second frequency region B[1][i] indicates that it is a second frequency region calculated from the first second frequency information 81 in the hierarchy hn. Here, since the second frequency information 81 and the object block images 64 (FIG. 3(b)) are in a one-to-one correspondence, "j" can also be regarded as a consecutive number for identifying an object block image 64 in the hierarchy hn.

Also, in this description, "i" indicates an integer not less than 0. Also, "i" indicates a division region number in a hierarchy hn and is a consecutive number starting from "0." In the example of FIG. 7, since the number of region division is "4," i = 0 to 3. For example, the second frequency region B[j][0] indicates that it is a 0th second frequency region in the hierarchy hn.

In the example of FIG. 7, the second frequency region B[j][0] is constituted of a second frequency element 110. The second frequency element 110 is a DC component. The second frequency region B[j][1] includes a plurality of second frequency elements 111. The second frequency elements 111 are AC components. The second frequency region B[j][2] includes a plurality of second frequency elements 112. The second frequency elements 112 are AC components. The second frequency region B[j][3] includes a plurality of second frequency elements 113. The second frequency elements 113 are AC components. A frequency of the second frequency region B[j][3] is higher than a frequency of the second frequency region B[j][2]. The frequency of the second frequency region B[j][2] is higher than a frequency of the second frequency region B[j][1].

FIG. 8 is a diagram showing an example of a calculation process of second feature amounts in the matching degree calculation process. In each of Ad[ ][ ], Sd[ ][ ], and Rd[ ][ ] in FIG. 8, the number j that identifies the second frequency information 81 that is the base is indicated in the first parenthesis. The number in the second parenthesis is the number i of the second frequency region B[j][i] that is the base. "i" is the number that identifies the second frequency region B[j][i].

As shown in FIG. 1 and FIG. 8, the comparing portion 36 calculates a second feature amount information F2[j] from the second divided region set 100[j]. The second feature amount information F2[j] includes a plurality of second feature amounts.

Specifically, the comparing portion 36 calculates the second feature amounts that indicate features of the second frequency region B[j][i] for each of the plurality of second frequency regions B[j][i].

The second feature amount that indicates the feature of the second frequency region B[j][0] is the DC component Ad[j] [0] that is the second frequency element 110.

The second feature amounts that indicate the features of the second frequency region B[j][1] include a sum Sd[j] [1] of absolute values of the plurality of second frequency elements 111 and a range Rd[j][1] of the plurality of second frequency elements 111. The range Rd[j][1] is a value obtained by subtracting a minimum value from a maximum value of the second frequency elements 111 of the second frequency region B[j][1].

The second feature amounts that indicate the features of the second frequency region B[j][2] include a sum Sd[j][2] of absolute values of the plurality of second frequency elements 112 and a range Rd[j][2] of the plurality of second frequency elements 112. The range Rd[j][2] is a value obtained by subtracting a minimum value from a maximum value of the second frequency elements 112 of the second frequency region B [j][2].

The second feature amounts that indicate the features of the second frequency region B[j][3] include a sum Sd[j][3] of absolute values of the plurality of second frequency elements 113 and a range Rd[j][3] of the plurality of second frequency elements 113. The range Rd[j][3] is a value obtained by subtracting a minimum value from a maximum value of the second frequency elements 113 of the second frequency region B[j][3].

The DC component Ad[j][0], the sums Sd[j][1] to Sd[j][3] of absolute values, and the ranges Rd[j][1] to Rd[j][3] constitute the second feature amount information F2[j].

As described above with reference to FIG. 7 and FIG. 8, according to the example embodiment, the comparing portion 36 divides each of the second frequency information 81 into the plurality of second frequency regions B[j][i]. The comparing portion 36 then calculates the second feature amounts (Ad[j] [0], Sd[j][1] to Sd[j][3], and Rd[j][1] to Rd[j][3])]) for each of the plurality of second frequency regions B[j][i]. The second feature amounts that indicate the features of the second frequency information 81 can thus be extracted with high precision from each of the second frequency information 81. Consequently, the precision when the detecting portion 37 detects the target region can be improved further.

FIG. 9 is a diagram showing an example of a region division process of the first frequency information 71 in the matching degree calculation process. As shown in FIG. 9, for convenience of description, the four first frequency information 71 in the hierarchy h2 are referred to at times as the first frequency information 711, 712, 713, and 714.

As shown in FIG. 1 and FIG. 9, the comparing portion 36 divides each of the first frequency information 71 into a plurality of first frequency regions A[k][i] in accordance with a frequency characteristic. In the example of FIG. 9, the comparing portion 36 divides the first frequency information 711 into four first frequency regions A[1][0] to A[1][3]. The number of divisions m is the same as the number of divisions m of the second frequency information 811. In the example of FIG. 9, m = 4. The first frequency regions A[k][i] are indicated by dot hatching in the figure.

In this description, "k" indicates an integer not less than 1 and is a consecutive number starting from "1" for identifying a first frequency information 71 in a hierarchy hn. In the example of FIG. 9, in the hierarchy h2, k = 1 to 4 since four first frequency information 71 are present. In this case, for example, the first frequency regions A[1] [0] to A[1][3] indicate that these are the first frequency regions calculated from the first frequency information 711. Here, since the first frequency information 71 and the reference block images 54 (FIG. 3(a)) are in a one-to-one correspondence, "k" can also be regarded as a consecutive number for identifying a reference block image 54 in the hierarchy hn.

In the example of FIG. 9, the first frequency region A[1][0] is constituted of a first frequency element 210. The first frequency element 210 is a DC component. The first frequency region A[1][1] includes a plurality of first frequency elements 211. The first frequency elements 211 are AC components. The first frequency region A[1][2] includes a plurality of first frequency elements 212. The first frequency elements 212 are AC components. The first frequency region A[1][3] includes a plurality of first frequency elements 213. The first frequency elements 213 are AC components. A frequency of the first frequency region A[1][3] is higher than a frequency of the first frequency region A[1][2]. The frequency of the first frequency region A[1][2] is higher than a frequency of the first frequency region A[1][1].

The first frequency regions A[1][0] to A[1][3] constitute a first divided region set 200[1]. In the example of FIG. 9, the comparing portion 36 generates the first divided region sets 200[2] to 200[4] in the same manner as the first divided region set 200[1]. The first divided region sets 200[2] to 200[4] are generated by dividing the first frequency information 712 to 714, respectively. Here, the first divided region sets 200[1] to 200[4] are referred to collectively at times as the first divided region sets 200[k].

FIG. 10 is a diagram showing an example of a calculation process of first feature amounts in the matching degree calculation process. In each of At[ ][ ], St[ ][ ], and Rt[ ][ ] in FIG. 10, the number in the first parenthesis is the number k that identifies the first frequency information 71 that is the base. The number in the second parenthesis is the number i of the first frequency region A[k][i] that is the base. "i" is the number that identifies the first frequency region A[k][1].

As shown in FIG. 1 and FIG. 10, the comparing portion 36 calculates a first feature amount information F1[1] to F1[4] for the first divided region set 200[1] to 200[4], respectively. Each of the first feature amount information F1[1] to F1[4] includes a plurality of first feature amounts.

Specifically, the comparing portion 36 calculates the first feature amounts that indicate features of the first frequency regions A[k][i] for each of the plurality of first divided region sets 200[k] and each of the plurality of first frequency regions A[k][i].

In the following, the first divided region set 200[1] and the first feature amount information F1[1] obtained from the first frequency information 711 shall be noted.

The first feature amount that indicates the feature of the first frequency region A[1][0] is the DC component At[1][0] that is the first frequency element 210.

The first feature amounts that indicate the features of the first frequency region A[1][1] include a sum St[1][1] of absolute values of the plurality of first frequency elements 211 and a range Rt[1][1] of the plurality of first frequency elements 211. The range Rt[1][1] is a value obtained by subtracting a minimum value from a maximum value of the first frequency elements 211 of the first frequency region A[1][1].

The first feature amounts that indicate the features of the first frequency region A[1][2] include a sum St[1][2] of absolute values of the plurality of first frequency elements 212 and a range Rt[1][2] of the plurality of first frequency elements 212. The range Rt[1][2] is a value obtained by subtracting a minimum value from a maximum value of the first frequency elements 212 of the first frequency region A[1][2].

The first feature amounts that indicate the features of the first frequency region A[1][3] include a sum St[1][3] of absolute values of the plurality of first frequency elements 213 and a range Rt[1][3] of the plurality of first frequency elements 213. The range Rt[1][3] is a value obtained by subtracting a minimum value from a maximum value of the first frequency elements 213 of the first frequency region A[1][3].

The DC component At[1][0], the sums St[1][1] to St[1][3] of absolute values, and the ranges Rt[1][1] to Rt[1][3] constitute the first feature amount information F1[1] .

In the example of FIG. 10, the comparing portion 36 calculates the first feature amount information F1[2] to F1[4] from the first divided region sets 200[2] to 200[4], respectively, in the same manner as in the calculation of the first feature amount information F1[1]. Here, the first feature amount information F1[1] to F1[4] are referred to collectively at times as the first feature amount information F1[k].

As described above with reference to FIG. 9 and FIG. 10, according to the example embodiment, the comparing portion 36 divides each of the first frequency information 71 into the plurality of first frequency regions A[k][i]. The comparing portion 36 then calculates the first feature amounts (At[k][0], St[k][1] to St[k][3], and Rt[k][1] to Rt[k][3]) for each of the plurality of first frequency regions A[k][i]. The first feature amounts that indicate the features of the first frequency information 71 can thus be extracted with high precision from each of the first frequency information 71. Consequently, the precision when the detecting portion 37 detects the target region can be improved further.

FIG. 11 is a diagram showing an example of a calculation process of feature amount matching degrees and a matching degree in the matching degree calculation process. As shown in FIG. 1 and FIG. 11, the comparing portion 36 compares, for each first feature amount information F1[k], the first feature amounts (At[k][i], St[k][i], and Rt[k][i]) included in the first feature amount information F1[k] and the second feature amounts (Ad[j][i], Sd[j][i], and Rd[j][i]) included in the second feature amount information F2[j].

The comparing portion 36 then calculates, for each first feature amount information F1[k] and based on the comparison result, the feature amount matching degrees C(k) that indicate the matching degrees of the first feature amounts (At[k][i], St[k][i], and Rt[k][i]) included in the first feature amount information F1[k] and the second feature amounts (Ad[j][i], Sd[j][i], and Rd[j][i]) included in the second feature amount information F2[j].

In the example of FIG. 11, "i" in At[k][i] and Ad[j][i] is 0 (zero). Also, "i" in St[k][i], Rt[k][i], Sd[j][i], and Rd[j][i] is 1, 2, or 3.

Specifically the comparing portion 36 calculates the feature amount matching degrees C(k) by formula (1), formula (2), and formula (3).

$$C(k) = DC(k) \times AC(k) \quad \dots \quad (1)$$

$$DC(k) = Amax - Abs(At[k][0] - Ad[j][0]) \quad \dots \quad (2)$$

$$AC(k) = \sum_{i=1}^{m-1} \alpha \left( Ratio(St[k][i], Sd[j][i]) + Ratio(Rt[k][i], Rd[j][i]) \right) \quad \dots \quad (3)$$

In the formula (1) to formula (3), "k, " as mentioned above, indicates an integer not less than 1 and is a consecutive number starting from "1" for identifying the first frequency information 71 in a hierarchy hn. "Amax" indicates a maximum value of the DC component obtained in advance by calculation. "Abs" indicates an absolute value of (At[k][0]-Ad[j][0]).

As mentioned above, "j" indicates an integer not less than 1 and is a consecutive number starting from "1" for identifying the second frequency information 81 in a hierarchy hn. In the formula (1) to formula (3), "j" is a fixed value. By changing "j," the matching degree C# of another second frequency information 81 of the same hierarchy hn and the respective first frequency information 71 of the same hierarchy hn can be calculated.

As mentioned above, "i" indicates the division region number when the region divisions of the first frequency information 71 and the second frequency information 81 are performed. "i = 0" indicates a DC component. Therefore, DC(k) expressed by the formula (2) is an element that represents the DC component. On the other hand, "i = 1 to 3" indicate AC components. As mentioned above, "m" indicates the number of divisions when the region divisions of the first frequency information 71 and the second frequency information 81 are performed. AC(k) expressed by the formula (3) is thus an element that represents the AC components. Also, the symbol $\Sigma$ in the formula (3) represents a sum of just the AC components.

"Ratio (St[k][i], Sd[j][i])" indicates that the smaller value among St[k][i] and Sd[j][i] is divided by the larger value. "Ratio (Rt[k] [i], Rd[j][i])" indicates that the smaller value among Rt[k] [i] and Rd[j] [i] is divided by the larger value. "$\alpha$" indicates a correction coefficient.

The formula (1) to formula (3) shall now be described in detail. As shown by the formula (2), DC(k) of the formula (1) includes the DC component information At[k] [0] related to the DC component of the first frequency information 71 of the reference image 50 and the DC component information Ad[j] [0] related to the DC component of the second frequency information 81 of the detection object image 60. That is, the first feature amounts in the first frequency information 71 of the reference image 50 include the DC component information At[k][0]. Also, the second feature amounts in the second frequency information 81 of the detection object image 60 include the DC component information Ad[j][0].

DC(k) of the formula (2) represents a matching degree of the DC component information At[k] [0] of the first feature amounts related to the reference image 50 and the DC component information Ad[j][0] of the second feature amounts related to the detection object image 60. That is, as can be understood from the formula (2), the smaller an absolute value of a difference of the DC component information At[k][0] related to the reference image 50 and the DC component information Ad[j][0] related to the detection object image 60 is, the greater DC(k) of the formula (2) becomes. Therefore, the higher the matching degree of the DC component of the reference image 50 and the DC component of the detection object image 60 is, the greater DC(k) becomes.

As shown in the formula (3), AC(k) of the formula (1) includes the AC component information St[k][i] and Rt[k][i] related to the AC components of the first frequency information 71 of the reference image 50 and the AC component information Sd[j][i] and Rd[j][i] related to the AC components of the second frequency information 81 of the detection object image 60. That is, the first feature amounts in the first frequency information 71 of the reference image 50 include the AC component information St[k][i] and Rt[k][i]. Also, the second feature amounts in the second frequency information 81 of the detection object image 60 include the AC component information Sd[j][i] and Rd[j][i].

AC(k) of the formula (3) represents a matching degree of the AC component information St[k][i] of the first feature amounts related to the reference image 50 and the AC component information Sd[j][i] of the second feature amounts related to the detection object image 60. Further, AC(k) represents a matching degree of the AC component information Rt [k][i] of the first feature amounts related to the reference image 50 and the AC component information Rd[j][i] of the second feature amounts related to the detection object image 60.

That is, as can be understood from the formula (3), the smaller the difference of the AC component information St [k][i] related to the reference image 50 and the AC component information Sd[j][i] related to the detection object image 60 is, the greater Ratio (St[k][i], Sd[j][i]) becomes and the greater AC(k) of the formula (3) becomes. Also, the smaller the difference of the AC component information Rt[k][i] related to the reference image 50 and the AC component information Rd[j][i] related to the detection object image 60 is, the greater Ratio (Rt[k] [i], Rd[j][i]) becomes and the greater AC(k) of the formula (3) becomes. Thus, the higher the matching degree of the AC component of the reference image 50 and the AC component of the detection object image 60 is, the greater AC(k) becomes.

As shown by the formula (1) described above, according to the example embodiment, the comparing portion 36 calculates, based on the matching degree DC(k) of the DC component information of the first feature amounts and the DC component information of the second feature amounts and the matching degree AC(k) of the AC component information of the first feature amounts and the AC component information of the second feature amounts, the feature amount matching degrees C(k) that represent the matching degrees of the first feature amounts related to the reference image 50 and the second feature amounts related to the detection object image 60. The matching degrees C# of the reference image 50 and the detection object image 60 can thus be calculated with higher precision.

Here, weights of DC(k) and AC(k) in the formula (1) are adjusted by adjusting the magnitude of "Amax" of the formula (2) and the magnitude of "$\alpha$" of the formula (3).

In the example of FIG. 7 to FIG. 11, the comparing portion 36 calculates the matching degree C# of the second frequency information 811 (FIG. 7) and the first frequency information 711 to 714 (FIG. 9) based on the plurality of feature amount matching degrees C(1) to C(4).

For example, the comparing portion 36 may calculate an average value of the feature amount matching degrees C(1) to C(4) and output the average value as the matching degree C#.

For example, the comparing portion 36 may output a maximum value among the feature amount matching degrees C(1) to C(4) as the matching degree C#.

For example, the comparing portion 36 may calculate an average value of an upper p% among the feature amount matching degrees C(1) to C(4) and output the average value as the matching degree C#. "p" is determined by experiment and/or experience.

The comparing portion 36 calculates, for each second frequency information 81 of the object block images 64 and based on the plurality of feature amount matching degrees C(k), the matching degrees C# of the second frequency information 81 and the first frequency information 71.

Next, a region detecting method according to the example embodiment shall be described with reference to FIG. 1 and FIG. 12 to FIG. 16. The region detecting method is executed by the region detecting device 1. FIG. 12 is a flowchart showing an example of the region detecting method according to the example embodiment. As shown in FIG. 12, the region detecting method includes step S1 to step S7. The storage portion 5 stores the computer program for making the region detecting device 1 (the computer) execute step S1 to step S7. The processing portion 3 executes the computer program stored in the storage portion 5 to execute step S1 to step S7. The region detecting method preferably includes step S100. Step S100 shall be described later with the third modification.

As shown in FIG. 1 and FIG. 12, first, in step S1, the parameter setting portion 31 sets parameters for executing the hierarchization process and the frequency information calculation process. Specifically, the parameter setting portion 31 sets the number of hierarchizations N when hierarchizing the detection object image 60 and the reference image 50, the reduction rates for each hierarchy hn when hierarchizing the detection object image 60 and the reference image 50, and the sizes of the object block images 64 and the reference block images 54.

Next, in step S2, the first hierarchizing portion 32 processes the reference image 50 using the different reduction rates to hierarchize it into the N hierarchies (where N is an integer not less than 2) and generate the plurality of reference hierarchical images 50n.

Next, in step S3, the first frequency information calculating portion 33 calculates the first frequency information 71 from each of the plurality of reference hierarchical images 50n.

Next, in step S4, the second hierarchizing portion 34 processes the detection object image 60 using the different reduction rates to hierarchize it into the N hierarchies and generate the plurality of object hierarchical images 60n.

Next, in step S5, the second frequency information calculating portion 35 calculates the second frequency information 81 from each of the plurality of object hierarchical images 60n.

Next, in step S6, the comparing portion 36 compares the respective second frequency information 81 of the plurality of object hierarchical images 60n and the respective first frequency information 71 of the plurality of reference hierarchical images 50n.

Next, in step S7, the detecting portion 37 detects, based on the comparison result in step S6, the target region corresponding to the reference image 50 from the detection object image 60. The region detecting method is then ended.

As described above with reference to FIG. 12, by the region detecting method according to the example embodiment, the frequency information are compared among the plurality of reference hierarchical images 50n and the plurality of object hierarchical images 60n. That is, the frequency information are compared across a wide range in the plurality of hierarchies hn. Consequently, the target region can be detected with high precision from the detection object image 60 in comparison to the case where processing is executed only with unit pixel blocks of the DCT process.

FIG. 13 is a flowchart showing an example of step S3 of FIG. 12. As shown in FIG. 13, step S3 of FIG. 12 includes step S31 to step S35.

First, in step S31, the first frequency information calculating portion 33 acquires a reference block images 54 from a reference hierarchical image 50n.

Next, in step S32, the first frequency information calculating portion 33 calculates the first frequency information 71 from the reference block image 54.

Next, in step S33, the first frequency information calculating portion 33 judges whether or not the processes of step S31 and step S32 have been completed for all reference block images 54 of the same hierarchy hn.

If a negative judgment (No) is made in step S33, the process proceeds to step S31.

On the other hand, if a positive judgment (Yes) is made in step S33, the process proceeds to step S35.

Next, in step S35, the first frequency information calculating portion 33 judges whether or not step S31 to step S33 have been completed for all hierarchies hn.

If a negative judgment (No) is made in step S35, the process proceeds to step S34.

Next, in step S34, the first frequency information calculating portion 33 changes the hierarchy hn and makes the process proceed to step S31.

On the other hand, if a positive judgment (Yes) is made in step S35, the process proceeds to step S4 of FIG. 12.

FIG. 14 is a flowchart showing an example of step S5 of FIG. 12. As shown in FIG. 14, step S5 of FIG. 12 includes step S51 to step S55.

First, in step S51, the second frequency information calculating portion 35 acquires an object block image 64 from an object hierarchical image 60n.

Next, in step S52, the second frequency information calculating portion 35 calculates the second frequency information 81 from the object block image 64.

Next, in step S53, the second frequency information calculating portion 35 judges whether or not the processes of step S51 and step S52 have been completed for all object block images 64 of the same hierarchy hn.

If a negative judgment (No) is made in step S53, the process proceeds to step S51.

On the other hand, if a positive judgment (Yes) is made in step S53, the process proceeds to step S55.
Next, in step S55, the second frequency information calculating portion 35 judges whether or not step S51 to step S53 have been completed for all hierarchies hn.
If a negative judgment (No) is made in step S55, the process proceeds to step S54.
Next, in step S54, the second frequency information calculating portion 35 changes the hierarchy hn and makes the process proceed to step S51.
On the other hand, if a positive judgment (Yes) is made in step S55, the process proceeds to step S6 of FIG. 12.
FIG. 15 is a flowchart showing an example of step S6 of FIG. 12. As shown in FIG. 15, step S6 of FIG. 12 includes step S61 to step S66.
First, in step S61, the comparing portion 36 calculates the matching degrees C# of the second frequency information 81 of each of the object block images 64 and the first frequency information 71 of the reference block images 54. In step S61, the comparing portion 36 calculates all matching degrees C# of the same hierarchy hn.
Next, in step S62, the comparing portion 36 allocates each of the matching degrees C# to a pixel region 91 of the same size as the object block image 64.
Since the calculation of all matching degrees C# of the same hierarchy hn has been completed in step 61, the matching degree image region 92 constituted of the plurality of pixel regions 91 is formed in the hierarchy hn.
Next, in step S63, the comparing portion 36 calculates the magnified matching degree region 101 with which the matching degree image region 92 is magnified to the same size as the detection object image 60.
Next, in step S64, the comparing portion 36 judges whether or not step S61 to step S63 have been completed for all hierarchies hn.
If a negative judgment (No) is made in step S64, the process proceeds to step S65.
Next, in step S65, the comparing portion 36 changes the hierarchy hn and makes the process proceed to step S61.
On the other hand, if a positive judgment (Yes) is made in step S64, the process proceeds to step S66.
Next, in step S66, the comparing portion 36 calculates the synthesized matching degree region 102 with which the plurality of magnified matching degree regions 101 obtained for each hierarchy hn are synthesized. The process then proceeds to step S7 of FIG. 12.
Next, in step S7, the detecting portion 37 detects the target region from the detection object image 60 based on the synthesized matching degree region 102.
FIG. 16 is a flowchart showing an example of step S61 of FIG. 15. As shown in FIG. 16, step S61 of FIG. 15 includes step S611 to step S622.
First, in step S611, the comparing portion 36 divides a first frequency information 71 into a plurality of first frequency regions A[k][i] in accordance with the frequency characteristic.
Next, in step S612, the comparing portion 36 calculates the first feature amounts that indicate the features of a first frequency region A[k][i].
Next, in step S613, the comparing portion 36 judges whether or not step S612 has been completed for all first frequency regions A[k][i].
If a negative judgment (No) is made in step S613, the process proceeds to step S612.
On the other hand, if a positive judgment (Yes) is made in step S613, the process proceeds to step S614.
Next, in step S614, the comparing portion 36 judges whether or not there is another first frequency information 71 in the same hierarchy hn.
If a positive judgment (Yes) is made in step S614, the process proceeds to step S615.
Next, in step S615, the comparing portion 36 changes the object of processing to the other first frequency information 71 and makes the process proceed to step S611.
On the other hand, if a negative judgment (No) is made in step S614, the process proceeds to step S616.
Next, in step S616, the comparing portion 36 divides a second frequency information 81 into a plurality of second frequency regions B[j][i] in accordance with the frequency characteristic.
Next, in step S617, the comparing portion 36 calculates the second feature amounts that indicate the features of a second frequency region B[j][i].
Next, in step S618, the comparing portion 36 judges whether or not step S617 has been completed for all second frequency regions B[j][i].
If a negative judgment (No) is made in step S618, the process proceeds to step S617.
On the other hand, if a positive judgment (Yes) is made in step S618, the process proceeds to step S619.
Next, in step S619, the comparing portion 36 compares the first feature amounts and the second feature amounts and calculates the feature amount matching degrees C(k) that indicates the matching degree of the first feature amounts and the second feature amounts.
Next, in step S620, the comparing portion 36 calculates the matching degree C# of the second frequency information 81 and the first frequency information 71 based on the plurality of feature amount matching degrees C(k) of the same hierarchy hn.

Next, in step S621, the comparing portion 36 judges whether or not there is another second frequency information 81 in the same hierarchy hn.

If a positive judgment (Yes) is made in step S621, the process proceeds to step S622.

Next, in step S622, the comparing portion 36 changes the object of processing to the other second frequency information 81 and makes the process proceed to step S616.

On the other hand, if a negative judgment (No) is made in step S621, the process proceeds to step S62 of FIG. 15.

(First Modification)

A first modification of the example embodiment shall be described with reference to FIG. 1, FIG. 17(a), and FIG. 17(b). The first modification differs from the example embodiment described above with reference to FIG. 1 to FIG. 16 mainly in the point that in executing the reduction process in the hierarchization process, shifting of a reduction starting pixel is executed to increase the reference block images 54 and the object block images 64. Points by which the first modification differs from the example embodiment described above shall mainly be described below.

FIG. 17(a) is a diagram showing an example of a reduction starting pixel PX[q] in the hierarchization process according to the first modification. FIG. 17(b) is a diagram showing a shifted example of the reduction starting pixel PX[q] in the hierarchization process according to the first modification. "q" is an integer not less than 1.

In FIG. 17(a) and FIG. 17(b), an original image 120 is shown as an example. The original image 120 is constituted of a plurality of pixels PX. An example in which the original image 120 is reduced to 1/2 shall be described. The original image 120 is reduced, for example, by a thinning process. In this case, the original image 120 is reduced, for example, by executing a nearest neighbor interpolation, a bilinear interpolation, or a bicubic interpolation. The original image 120 is the reference image 50 or the detection object image 60.

As shown in FIG. 17(a) and FIG. 17(b), when reducing the reference image 50, the first hierarchizing portion 32 sets, from among the plurality of pixels PX constituting the reference image 50, a plurality of reduction starting pixels PX[q] at each of which the reduction process at the same reduction rate is started and calculates reduced images 121[q] of the same hierarchy hn for each reduction starting pixel PX[q]. In this description, "q" is an integer not less than 1. Although two reduction starting pixels PX[1] and PX[2] are set in the example of FIG. 17(a) and FIG. 17(b), the number of the reduction starting pixels PX[q] is not restricted in particular as long as it is not less than 2.

As shown in FIG. 17(a), the first hierarchizing portion 32 starts the reduction process from the reduction starting pixel PX[1] and calculates the reduced image 121[1] as the reference hierarchical image 50n.

The reduction starting pixel PX[2] of FIG. 17(b) is shifted by one pixel PX in each of an X coordinate and a Y coordinate with respect to the reduction starting pixel PX[1] of FIG. 17(a). The number of shift pixels is not restricted in particular. Also, shifting may be performed for only the X coordinate or shifting may be performed for only the Y coordinate.

As shown in FIG. 17(b), the first hierarchizing portion 32 starts the reduction process from the reduction starting pixel PX[2] and calculates the reduced image 121[2] as the reference hierarchical image 50n.

As shown in FIG. 17(a) and FIG. 17(b), when reducing the detection object image 60, the second hierarchizing portion 34 sets, from among the plurality of pixels PX constituting the detection object image 60, a plurality of reduction starting pixels PX[q] at each of which the reduction process at the same reduction rate is started and calculates reduced images 121[q] of the same hierarchy hn for each reduction starting pixel PX[q]. Although two reduction starting pixels PX[1] and PX[2] are set in the example of FIG. 17(a) and FIG. 17(b), the number of the reduction starting pixels PX[q] is not restricted in particular as long as it is not less than 2.

As shown in FIG. 17(a), the second hierarchizing portion 34 starts the reduction process from the reduction starting pixel PX[1] and calculates the reduced image 121[1] as the object hierarchical image 60n.

As shown in FIG. 17(b), the second hierarchizing portion 34 starts the reduction process from the reduction starting pixel PX[2] and calculates the reduced image 121[2] as the object hierarchical image 60n.

As described above with reference to FIG. 17(a) and FIG. 17(b), according to the first modification, when the number of reduction starting pixels PX[q] becomes Z times (where Z is an integer not less than 2), the number of reference hierarchical images 50n becomes Z times and the number of object hierarchical images 60n becomes Z times. Therefore, in comparison to a case where the number of reduction starting pixels PX[q] is not increased, the first frequency information 71 and the second frequency information 81 can be calculated finely. Consequently, the matching degree C# of the first frequency information 71 and the second frequency information 81 can be calculated more precisely. The detecting portion 37 can thus detect the target region more precisely from the detection object image 60.

Also, when the number of reduction starting pixels PX[q] becomes Z times, the number of first frequency information 71 becomes Z times and the number of second frequency information 81 becomes Z times. Z times as many of the matching degree image regions 92 (FIG. 4 and FIG. 5) are thus calculated. For example, when Z = 2, the comparing portion 36 calculates two matching degree image regions 92 in each of the hierarchies h1 to h3 in FIG. 5.

In this case, the comparing portion 36 calculates the magnified matching degree region 101 using two matching degree image regions 92 in each hierarchy hn. Specifically, in magnifying the matching degree image region 92 that is to be the base, the comparing portion 36 uses the other matching degree image region 92 for interpolation. The magnified matching degree region 101 can thus be calculated with higher precision. As an interpolation method, for example, nearest neighbor interpolation, a bilinear interpolation, or a bicubic interpolation can be adopted.

According to the first modification, the magnified matching degree region 101 can be calculated based on Z times as many of the matching degree image regions 92 in the same hierarchy hn. The magnified matching degree region 101 can thus be calculated with higher precision.

Also, the number of reduction starting pixels PX[q] in the hierarchization of the reference image 50 and the number of reduction starting pixels PX[q] in the hierarchization of the detection object image 60 may be the same or may differ. For example, the number of reduction starting pixels PX[q] in the hierarchization of the detection object image 60 is made less than the number of reduction starting pixels PX[q] in the hierarchization of the reference image 50. Consequently, a processing time by the processing portion 3 can be shortened.

(Second Modification)

A second modification of the example embodiment shall be described with reference to FIG. 1, FIG. 18(a), and FIG. 18(b). The second modification differs from the example embodiment described above with reference to FIG. 1 to FIG. 16 mainly in the point that in executing the frequency information calculation process, shifting of a calculation starting pixel is executed to increase the first frequency information 71 and the second frequency information 81. Points by which the second modification differs from the example embodiment described above shall mainly be described below.

FIG. 18(a) is a diagram showing an example of the calculation starting pixel px[s] in the frequency information calculation process according to the second modification. FIG. 18(b) is a diagram showing a shifted example of the calculation starting pixel px[s] in the frequency information calculation process according to the second modification. "s" is an integer not less than 1.

In FIG. 18(a) and FIG. 18(b), an original image 120 is shown as an example. The original image 120 is constituted of a plurality of pixels PX.

As shown in FIG. 18(a), the original image 120 includes a block image 132. When the original image 120 is a reference hierarchical image 50n, the block image 132 is a reference block image 54. When the original image 120 is an object hierarchical image 60n, the block image 132 is an object block image 64.

As shown in FIG. 18(a), the first frequency information calculating portion 33 sets, for the reference block image 54, a calculation starting pixel px[1] at which the calculation process of the first frequency information 71 is started. The first frequency information calculating portion 33 then executes the frequency information calculation process from the calculation starting pixel px[1] and calculates the first frequency information 71.

Further, as shown in FIG. 18(b), the first frequency information calculating portion 33 acquires a new reference block image 54a having a pixel differing from the calculation starting pixel px[1] as a new calculation starting pixel px[2]. The first frequency information calculating portion 33 executes the frequency information calculation process on the reference block image 54a and calculates a first frequency information 71a.

As shown in FIG. 18(a), the second frequency information calculating portion 35 sets, for the object block image 64, a calculation starting pixel px[1] at which the calculation process of the second frequency information 81 is started. The second frequency information calculating portion 35 then executes the frequency information calculation process from the calculation starting pixel px[1] and calculates the second frequency information 81.

Further, as shown in FIG. 18(b), the second frequency information calculating portion 35 acquires a new reference block image 64a having a pixel differing from the calculation starting pixel px[1] as a new calculation starting pixel px[2]. The second frequency information calculating portion 35 executes the frequency information calculation process on the object block image 64a and calculates a second frequency information 81a.

Here, the calculation starting pixel px[2] of FIG. 18(b) is shifted by two pixels PX in each of the X coordinate and the Y coordinate with respect to the calculation starting pixel px[1] of FIG. 18(a). The number of shift pixels is not restricted in particular. Also, shifting may be performed for only the X coordinate or shifting may be performed for only the Y coordinate.

Also, although in the example of FIG. 18(a) and FIG. 18(b), one calculation starting pixel px[2] is added with respect to the calculation starting pixel px[1], the number of calculation starting pixels px[s] added is not restricted in particular.

As described above with reference to FIG. 18(a) and FIG. 18(b), according to the second modification, when the number of calculation starting pixels px[s] becomes Z times (where Z is an integer not less than 2), the number of first frequency information 71 becomes Z times and the number of second frequency information 81 becomes Z times. Therefore, in comparison to a case where the number of calculation starting pixel px[s] is not increased, the first frequency information 71 and the second frequency information 81 can be calculated finely. Consequently, the matching degree C# of the first frequency information 71 and the second frequency information 81 can be calculated more precisely. The detecting portion 37 can thus detect the target region more precisely from the detection object image 60.

Also, as with the first modification described with reference to FIG. 17(a) and FIG. 17(b), Z times as many of the matching degree image regions 92 (FIG. 4 and FIG. 5) are calculated in the second modification as well. Therefore, according to the second modification, the magnified matching degree region 101 can be calculated based on Z times as many of the matching degree image regions 92 in the same hierarchy hn. The magnified matching degree region 101 can thus be calculated with higher precision. Here, as with the first modification, the comparing portion 36 calculates the magnified matching degree region 101 by performing interpolation based on Z times as many of the matching degree image regions 92 in the second modification.

Also, the number of calculation starting pixels px[s] when calculating the first frequency information 71 and the number of calculation starting pixels px[s] when calculating the second frequency information 81 may be the same or may differ. For example, the number of calculation starting pixels px[s] when calculating the second frequency information 81 is made less than the number of calculation starting pixels px[s] when calculating the first frequency information 71. Consequently, the processing time by the processing portion 3 can be shortened.

(Third Modification)

A third modification of the example embodiment shall be described with reference to FIG. 1, FIG. 9, FIG. 12, FIG. 19, and FIG. 20. The third modification differs from the example embodiment described above with reference to FIG. 1 to FIG. 16 mainly in the point that the first frequency information 71 generated from the reference image 50 are unified. Points by which the third modification differs from the example embodiment described above shall mainly be described below.

An example in which the first frequency information 71 are unified in the hierarchy h2 of FIG. 9 shall be described. When a plurality of first frequency information 71 are present in the same hierarchy h2, the unifying portion 38 of FIG. 1 calculates a matching degree among the plurality of first frequency information 71. Then, based on the matching degree among the plurality of first frequency information 71, the unifying portion 38 unifies two or more of the first frequency information 71 in the plurality of first frequency information 71 and sets a new first frequency information 71. Consequently, according to the third modification, the first frequency information 71 of the reference image 50 that are objects of comparison with the second frequency information 81 of the detection object image 60 can be lessened. Acceleration of the process of calculating the feature amount matching degrees C(k) can thus be achieved.

Specifically, the unifying portion 38 extracts, for each hierarchy hn, a group (hereinafter referred to as the "similarity group") of first frequency information 71 with which the matching degree is not less than a threshold TH2 and unifies two or more of the first frequency information 71 belonging to the similarity group into a single first frequency information 71. The unifying portion 38 leaves just the first frequency information 71 after unification and deletes the other first frequency information 71 in the similarity group.

In this case, for example, the unifying portion 38 calculates an average value of two or more first frequency elements (for example, DCT coefficients) positioned at the same coordinates among two or more first frequency information 71 belonging to the similarity group. The unifying portion 38 sets the average value as the first frequency element of the new first frequency information 71. When the reference block image 54 is constituted of U pixels $\times$ V pixels in size, the unifying portion 38 calculates, for each of the $(U\times V)$ first frequency elements, the average value among two or more first frequency information 71 belonging to the similarity group.

Or, for example, the unifying portion 38 selects a single first frequency information 71 from among two or more first frequency information 71 belonging to the similarity group, sets the selected single first frequency information 71 as the new first frequency information 71, and deletes the other first frequency information 71.

Or, for example, the unifying portion 38 acquires a median value of two or more first frequency elements (for example, DCT coefficients) positioned at the same coordinates among two or more first frequency information 71 belonging to the similarity group. The unifying portion 38 sets the median value as the first frequency element of the new first frequency information 71. When the reference block image 54 is constituted of U pixels $\times$ V pixels in size, the unifying portion 38 acquires, for each of the $(U\times V)$ first frequency elements, the median value among two or more first frequency information 71 belonging to the similarity group.

For example, as shown in FIG. 9, when, in the hierarchy h2, the matching degree of the first frequency information 711 and the first frequency information 712 among the first frequency information 711 to 714 is not less than the threshold TH2, the unifying portion 38 unifies the first frequency information 711 and the first frequency information 712 and sets a single new first frequency information 71. Therefore, in the hierarchy h2, the four first frequency information 71 are reduced to three first frequency information 71.

Also, the unifying portion 38 calculates the matching degree among the first frequency information 71 in the same manner as the formula (1) to formula (3) described above.

Next, a unification process shall be described with reference to FIG. 1, FIG. 12, FIG. 19, and FIG. 20. As shown in FIG.1 and FIG. 12, in the third modification, step S100 is executed between step S3 and step S4. The processing portion 3 executes the computer program stored in the storage portion 5 to execute steps S1, S2, S3, S100, and S4 to S7.

In step S100, when a plurality of the first frequency information 71 are present in the same hierarchy hn, the unifying portion 38 unifies two or more of the first frequency information 71 based on the matching degree.

FIG. 19 is a flowchart showing an example of the unification process according to the third modification. That is, FIG. 19 is a flowchart that shows step S100 of FIG. 12. As shown in FIG. 19, step S100 of FIG. 12 includes step S101 to step S104.

First, in step S101, when a plurality of the first frequency information 71 are present in the same hierarchy hn, the unifying portion 38 calculates the matching degree among the plurality of first frequency information 71.

Next, in step S102, the unifying portion 38 unifies, based on the matching degree among the plurality of first frequency information 71, two or more of the first frequency information 71 in the plurality of first frequency information 71 and sets a new first frequency information 71.

Next, in step S103, the unifying portion 38 judges whether or not step S101 and step S102 have been completed for all hierarchies hn having a plurality of first frequency information 71.

If a negative judgment (No) is made in step S103, the process proceeds to step S104.

Next, in step S104, the unifying portion 38 changes the hierarchy hn and makes the process proceed to step S101.

On the other hand, if a positive judgment (Yes) is made in step S103, the process proceeds to step S4 of FIG. 12.

FIG. 20 is a flowchart showing an example of step S101 of FIG. 19. As shown in FIG. 20, step S101 of FIG. 19 includes step S1011 to step S1019.

First, in step S1011, the unifying portion 38 divides a first frequency information 71 into a plurality of first frequency regions A[k][i] in accordance with the frequency characteristic (FIG. 9).

Next, in step S1012, the unifying portion 38 calculates the first feature amounts (At[k][i], St[k][i], and Rt[k][i]) that indicate features of a first frequency region A[k][i] (FIG. 10).

Next, in step S1013, the unifying portion 38 judges whether or not step S1012 has been completed for all first frequency regions A[k][i].

If a negative judgment (No) is made in step S1013, the process proceeds to step S1012.

On the other hand, if a positive judgment (Yes) is made in step S1013, the process proceeds to step S1015.

Next, in step S1015, the unifying portion 38 judges whether or not there is another first frequency information 71 in the same hierarchy hn.

If a positive judgment (Yes) is made in step S1015, the process proceeds to step S1014.

Next, in step S1014, the unifying portion 38 changes the object of processing to the other first frequency information 71 and makes the process proceed to step S1011.

On the other hand, if a negative judgment (No) is made in step S1015, the process proceeds to step S1016.

Next, in step S1016, the unifying portion 38 compares the first feature amounts of a first frequency information 71 that is being noted and the first feature amounts of another first frequency information 71 and calculates a feature amount matching degree. In this case, for example, the unifying portion 38 replaces the second feature amounts (Ad[j] [i], Sd[j] [i], and Rd[j] [i]) of a second frequency information 81 in the formula (1) to formula (3) described above with the first feature amounts (At[k] [i], St[k] [i], and Rt[k] [i]) of the first frequency information 71 being noted to compare the first feature amounts of the two and calculate the feature amount matching degree.

Next, in step S1017, the unifying portion 38 judges whether or not step S1016 has been completed for all combinations of two first frequency information 71.

If a negative judgment (No) is made in step S1017, the process proceeds to step S1016.

On the other hand, if a positive judgment (Yes) is made in step S1017, the process proceeds to step S1018.

Next, in step S1018, the unifying portion 38 calculates the matching degree among a plurality of first frequency information 71 based on the plurality of feature amount matching degrees. In this case, for example, when calculating the matching degree among three or more first frequency information 71, the unifying portion 38 calculates the matching degree among the three or more first frequency information 71 based on the plurality of feature amount matching degrees in the same manner as in calculating the matching degree C# of FIG. 11. Also, for example, as the matching degree among two first frequency information 71, the unifying portion 38 uses the feature amount matching degree among the two first frequency information 71.

Next, in step S1019, the unifying portion 38 judges whether or not the calculation of the matching degree has been completed for all combinations of the first frequency information 71 of the same hierarchy hn.

If a negative judgment (No) is made in step S1019, the process proceeds to step S1018.

On the other hand, if a positive judgment (Yes) is made in step S1019, the process proceeds to step S102 of FIG. 19.

The example embodiments of the present invention have been described above with reference to the drawings. However, the present invention is not limited to the example embodiments described above and can be implemented in various modes within a scope not deviating from its gist. Also, it is possible to modify, as appropriate, the plurality of constituent elements disclosed in the example embodiment described above. For example, a certain constituent element among all constituent elements of a certain example embodiment may be added to the constituent elements of another example embodiment or some constituent elements among all constituent elements of a certain example embodiment may be deleted from the example embodiment.

Also, the drawings mainly illustrate the respective constituent elements schematically to facilitate understanding of the invention and there are cases where thicknesses, lengths, numbers, intervals, etc., of the respective constituent elements illustrated differ from actuality due to convenience of drawing preparation. Also, the arrangements of the respective constituent elements indicated in the example embodiments described above are but an example, are not restricted in particular, and can obviously be changed variously within a scope of practically not deviating from the effects of the present invention.

(1) Although with the example embodiment described with reference to FIG. 2(a) and FIG. 2(b), the parameter setting portion 31 includes "1" among the reduction rates in the hierarchization process, the reduction rates may be set to "less than 1" in all hierarchies hn.

(2) With the example embodiment described with reference to FIG. 1 to FIG. 6, the magnified matching degree regions 101 were calculated indiscriminately for all hierarchies hn. However, processing may be performed as follows instead. That is, first, the magnified matching degree region 101 is calculated for a hierarchy hn with which the reduction rate is small. Various computations for the other hierarchies hn are then executed just on regions corresponding to regions of the calculated magnified matching degree region 101 with which the matching degree C# is not less than a threshold. Consequently, acceleration of the detection process of the target region can be realized.

This application claims the benefit of priority to Japanese Patent Application No. 2024-048436 filed on March 25, 2024. The entire contents of this application are hereby incorporated herein by reference.

While preferred embodiments of the present invention have been described above, it is to be understood that variations and modifications will be apparent to those skilled in the art without departing from the scope and spirit of the present invention. The scope of the present invention, therefore, is to be determined solely by the following claims.

## Claims

**1.** A region detecting method for detecting, from a detection object image (60), a target region corresponding to a reference image (50), the region detecting method comprising:

a step (S2) of hierarchizing the reference image (50) into N hierarchies (where N is an integer not less than 2) by processing using different reduction rates and generating a plurality of reference hierarchical images (50n);
a step (S3) of calculating a first frequency information (71) from each of the plurality of reference hierarchical images (50n);
a step (S4) of hierarchizing the detection object image (60) into the N hierarchies by processing using different reduction rates and generating a plurality of object hierarchical images (60n);
a step (S5) of calculating a second frequency information (81) from each of the plurality of object hierarchical images (60n);
a step (S6) of comparing the respective second frequency information (81) of the plurality of object hierarchical images (60n) and the respective first frequency information (71) of the plurality of reference hierarchical images (50n); and
a step (S7) of detecting, from the detection object image (60), the target region corresponding to the reference image (50) based on a comparison result of the step (S6) of comparing.

**2.** The region detecting method according to claim 1, wherein in the step (S6) of comparing, the second frequency information (81) of the object hierarchical image (60n) and the first frequency information (71) of the reference hierarchical image (50n) are compared in the same hierarchy.

**3.** The region detecting method according to claim 1 or 2, wherein the step (S3) of calculating the first frequency information (71) includes

a step (S31) of acquiring a single or a plurality of reference block images (54) from each of the plurality of reference hierarchical images (50n), and
a step (S32) of calculating the first frequency information (71) from each of the reference block images (54); and the step (S5) of calculating the second frequency information (81) includes
a step (S51) of acquiring a single or a plurality of object block images (64) of the same size as the reference block images (54) from each of the plurality of object hierarchical images (60n), and
a step (S52) of calculating the second frequency information (81) from each of the object block images (64).

**4.** The region detecting method according to claim 3, wherein the step (S6) of comparing includes

a step (S61) of calculating matching degrees (C#) of the second frequency information (81) of the object block images (64) and the first frequency information (71) of the reference block images (54),
a step (S62) of allocating the matching degrees (C#) to pixel regions of the same size as the object block images (64) and calculating, for each hierarchy, a matching degree image region (92) constituted of a plurality of the pixel regions,
a step (S63, S64) of calculating, for each hierarchy, a magnified matching degree region (101) with which the matching degree image region (92) is magnified to the same size as the detection object image (60), and
a step (S66) of calculating a synthesized matching degree region (102) in which the plurality of magnified matching degree regions (101) obtained for each hierarchy are synthesized, and
in the step (S7) of detecting the target region, the target region is detected from the detection object image (60) based on the synthesized matching degree region (102).

**5.** The region detecting method according to claim 3 or 4, wherein the step (S6) of comparing includes

a step (S61, S64) of calculating, for each hierarchy, matching degrees (C#) of the second frequency information (81) of the object block images (64) and the first frequency information (71) of the reference block images (54); and the step (S61) of calculating the matching degrees (C#) includes
a step (S611) of dividing each of the first frequency information (71) into a plurality of first frequency regions (A[k][i]) in accordance with a frequency characteristic,
a step (S612) of calculating, for each of the plurality of first frequency regions (A[k][i]), a first feature amount indicating a feature of the first frequency region (A[k][i]),
a step (S616) of dividing each of the second frequency information (81) into a plurality of second frequency regions (B[j][i]) in accordance with a frequency characteristic,
a step (S617) of calculating, for each of the plurality of second frequency regions (B[j][i]), a second feature amount indicating a feature of the second frequency region (B[j][i]),
a step (S619) of comparing the first feature amount and the second feature amount and calculating, based on the comparison result, a feature amount matching degree (C(k)) indicating a matching degree of the first feature amount and the second feature amount, and
a step (S620) of calculating, for each second frequency information (81) of the object block image (64), the matching degree (C#) of the second frequency information (81) and the first frequency information (71) based on a plurality of the feature amount matching degrees (C(k)).

**6.** The region detecting method according to claim 5, wherein each of the first feature amounts and the second feature amounts includes a DC component information (At [k] [0], Ad[j][0]) and an AC component information (St[k] [i], Rt[k][i], Sd[j][i], Rd[j][i]); and
in the step (S619) of calculating the feature amount matching degree (C(k)), the feature amount matching degree (C(k)) is calculated based on a matching degree of the DC component information (At[k][0]) of the first feature amount and the DC component information (Ad[j][0]) of the second feature amount, and a matching degree of the AC component information (St[k][i], Rt[k][i]) of the first feature amount and the AC component information (Sd[j][i], Rd[j][i]) of the second feature amount.

**7.** The region detecting method according to any one of claims 3 to 6, further comprising:

a step (S101) of calculating, when a plurality of the first frequency information (71) are present in the same hierarchy, a matching degree among the plurality of first frequency information (71); and
a step (S102) of unifying, based on the matching degree among the plurality of first frequency information (71), two or more of the plurality of first frequency information (71) in the plurality of first frequency information (71) and setting a new first frequency information (71).

**8.** The region detecting method according to any one of claims 3 to 7, further comprising:
a step (S1) of setting, based on a texture (55) indicated by the reference image (50), a number of hierarchizations in hierarchizing the detection object image (60) and the reference image (50), reduction rates for each hierarchy in hierarchizing the detection object image (60) and the reference image (50), and sizes of the object block images (64)

and the reference block images (54).

**9.** The region detecting method according to any one of claims 1 to 8, wherein the plurality of reference hierarchical images (50n) include a reduced image with which the reference image (50) is reduced, and

when the reference image (50) is reduced in the step (S2) of generating the reference hierarchical images (50n), a plurality of reduction starting pixels (PX[q]) at which a reduction process at the same reduction rate is started are set from among a plurality of pixels constituting the reference image (50), and the reduced image of the same hierarchy is generated for each of the reduction starting pixels (PX[q]), and
the plurality of object hierarchical images (60n) include a reduced image with which the detection object image (60) is reduced, and
when the detection object image (60) is reduced in the step (S4) of generating the object hierarchical images (60n), a plurality of reduction starting pixels (PX[q]) at which a reduction process at the same reduction rate is started are set from among a plurality of pixels constituting the detection object image (60), and the reduced image of the same hierarchy is generated for each of the reduction starting pixels (PX[q]).

**10.** The region detecting method according to any one of claims 3 to 8, wherein in the step (S31) of acquiring the reference block images (54), for each reference block image (54), a calculation starting pixel (px[s]) at which a calculation process of the first frequency information (71) is started is set and a new reference block image (54) having a pixel differing from the calculation starting pixel as a new calculation starting pixel (px[s]) is acquired, and
in the step (S51) of acquiring the object block images (64), for each object block image (64), a calculation starting pixel (px[s]) at which a calculation process of the second frequency information (81) is started is set and a new object block image (64) having a pixel differing from the calculation starting pixel as a new calculation starting pixel (px[s]) is acquired.

**11.** A computer program that makes a computer (1) execute the region detecting method according to any one of claim 1 to claim 10.

**12.** A computer-readable storage medium (5) storing a program for causing a computer (1) to execute the region detecting method according to any one of claim 1 to claim 10.

**13.** A region detecting device (1) for detecting, from a detection object image (60), a target region corresponding to a reference image (50), the region detecting device (1) comprising:

a first hierarchizing portion (32) to hierarchize the reference image (50) into N hierarchies (where N is an integer not less than 2) by processing using different reduction rates and to generate a plurality of reference hierarchical images (50n);
a first frequency information calculating portion (33) to calculate a first frequency information (71) from each of the plurality of reference hierarchical images (50n);
a second hierarchizing portion (34) to hierarchize the detection object image (60) into the N hierarchies by processing using different reduction rates and to generate a plurality of object hierarchical images (60n);
a second frequency information calculating portion (35) to calculate a second frequency information (81) from each of the plurality of object hierarchical images (60n);
a comparing portion (36) to compare the respective second frequency information (81) of the plurality of object hierarchical images (60n) and the respective first frequency information (71) of the plurality of reference hierarchical images (50n); and
a detecting portion (37) to detect, from the detection object image (60), the target region corresponding to the reference image (50) based on a result of comparison by the comparing portion (36).

FIG. 1

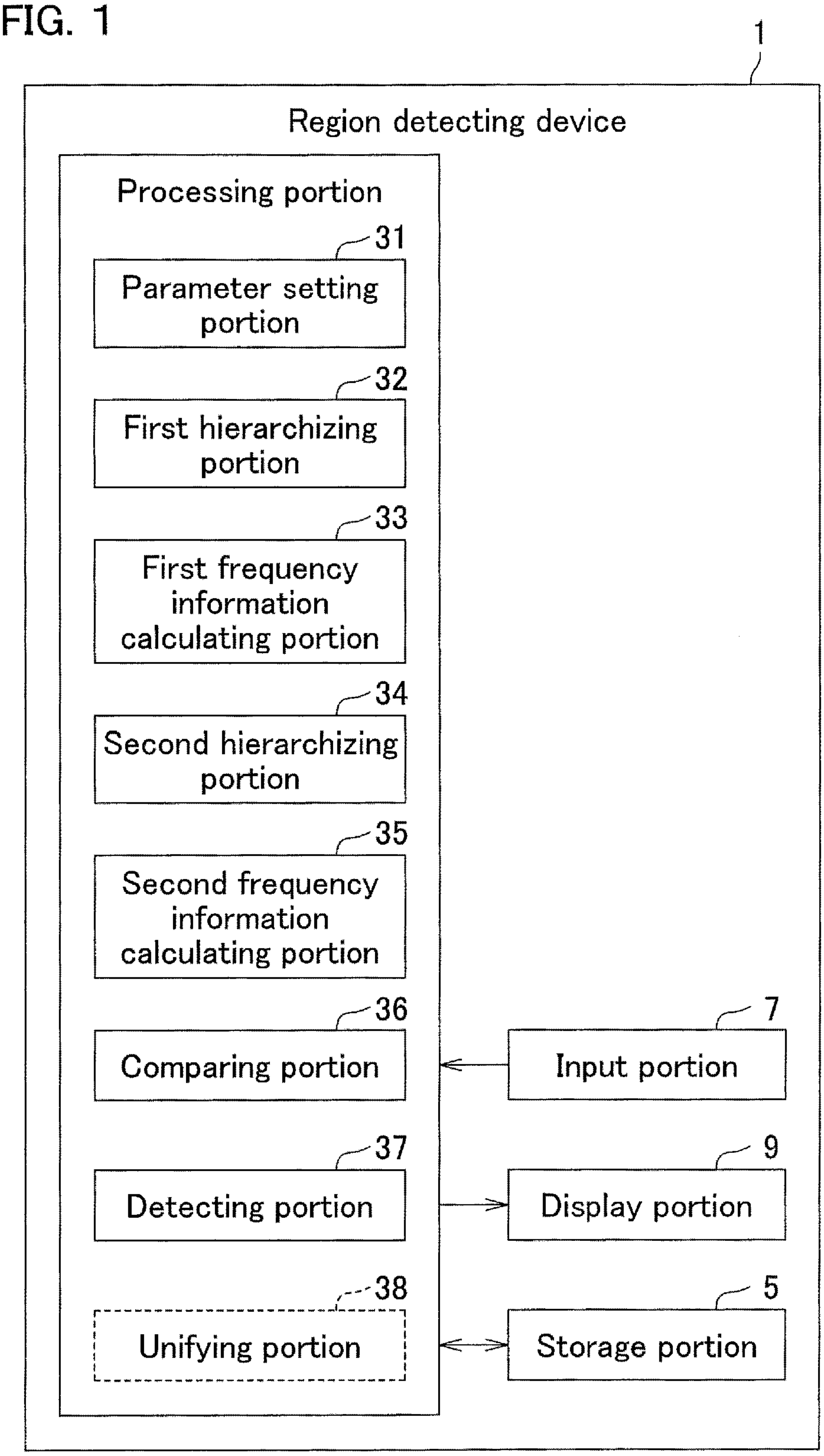
1
Region detecting device
Processing portion
31
Parameter setting portion
32
First hierarchizing portion
33
First frequency information calculating portion
34
Second hierarchizing portion
35
Second frequency information calculating portion
36
Comparing portion
7
Input portion
37
Detecting portion
9
Display portion
38
Unifying portion
5
Storage portion

FIG. 2(a)

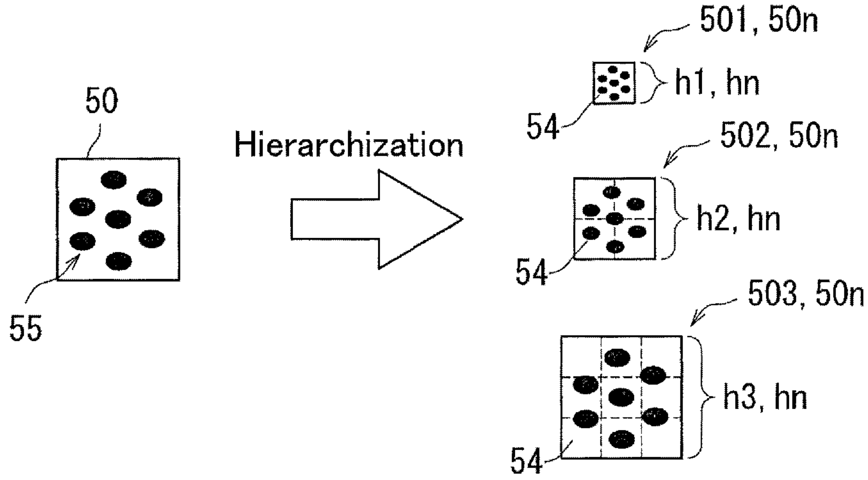
50
Hierarchization
55
501, 50n
h1, hn
54
502, 50n
h2, hn
54
503, 50n
h3, hn
54

FIG. 2(b)

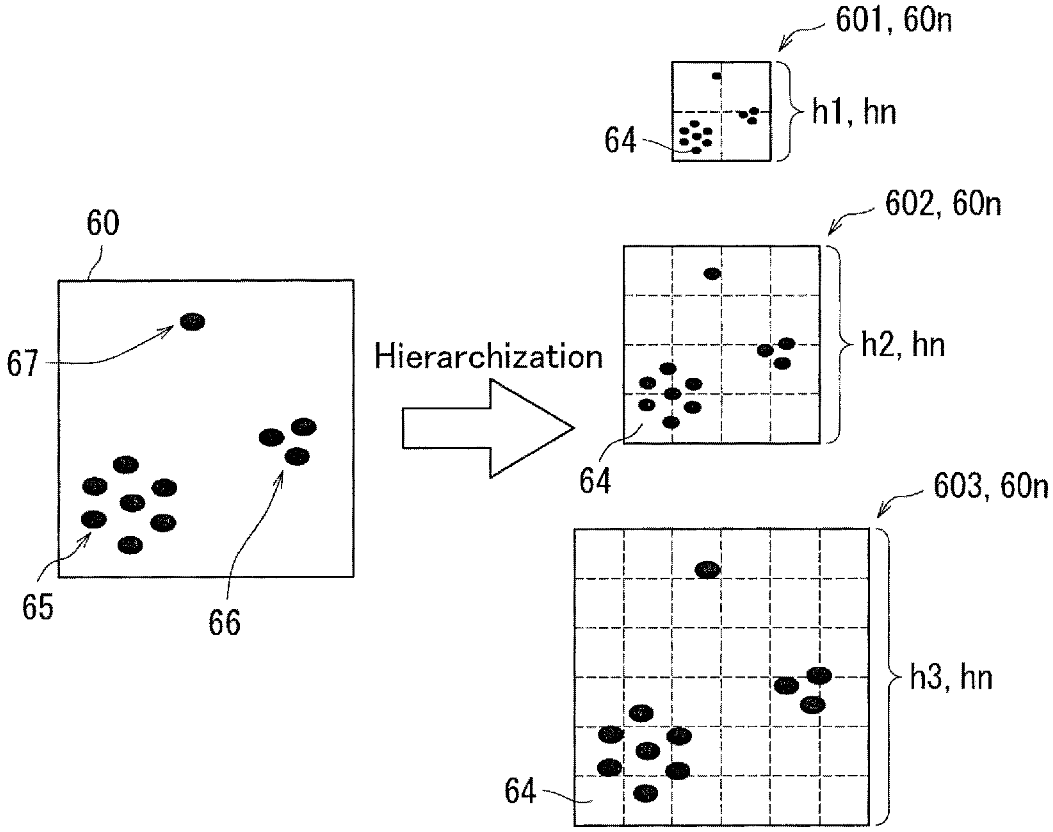
601, 60n
h1, hn
64
60
67
Hierarchization
602, 60n
h2, hn
64
65
66
603, 60n
h3, hn
64

FIG. 3(a)

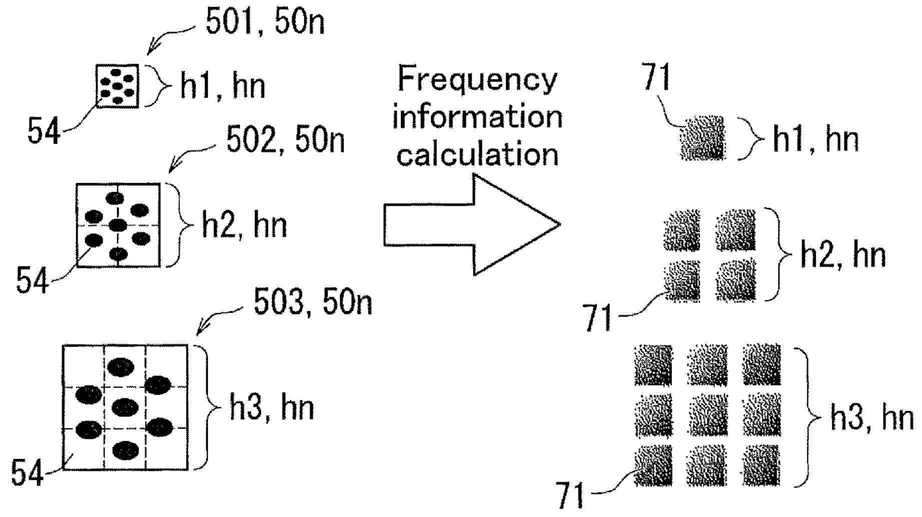
501, 50n
h1, hn
54
502, 50n
h2, hn
54
503, 50n
h3, hn
54
Frequency information calculation
71
h1, hn
h2, hn
71
h3, hn
71

FIG. 3(b)

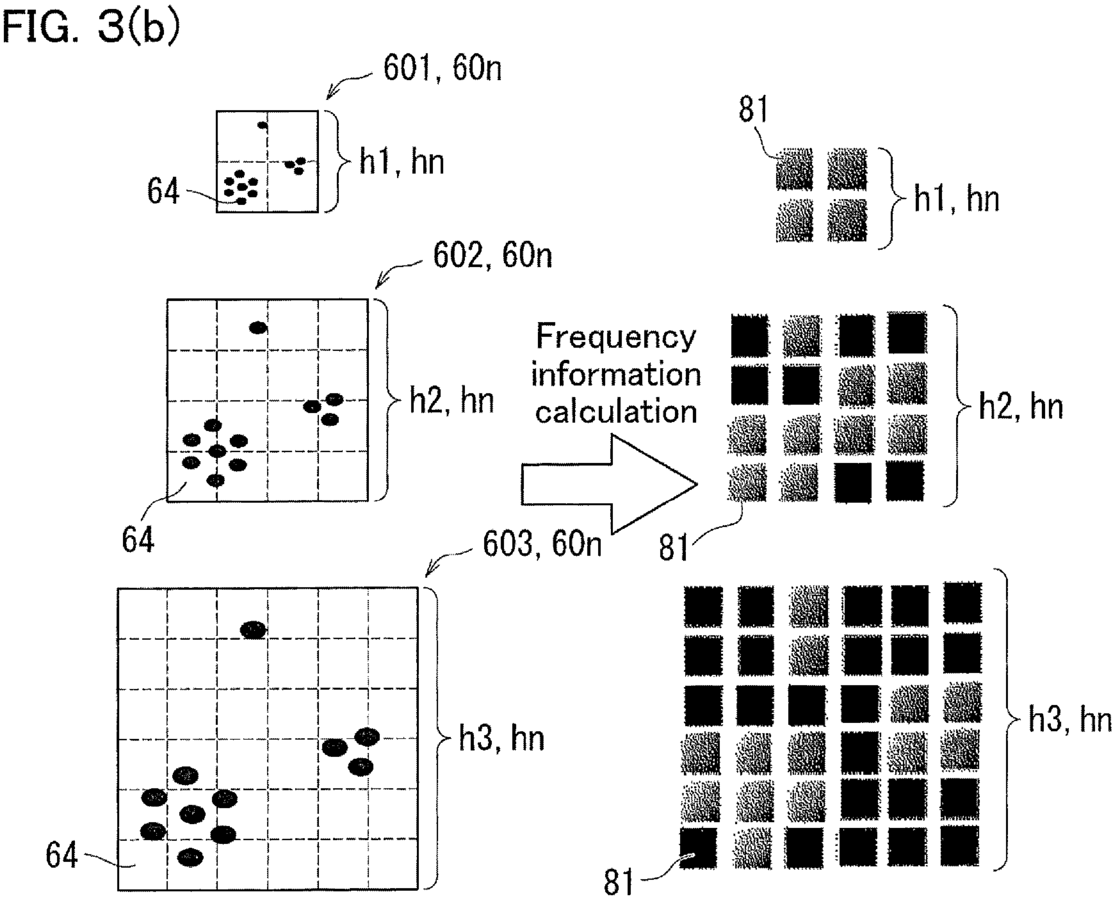
601, 60n
h1, hn
64
602, 60n
h2, hn
64
603, 60n
h3, hn
64
Frequency information calculation
81
h1, hn
h2, hn
81
h3, hn
81

FIG. 4

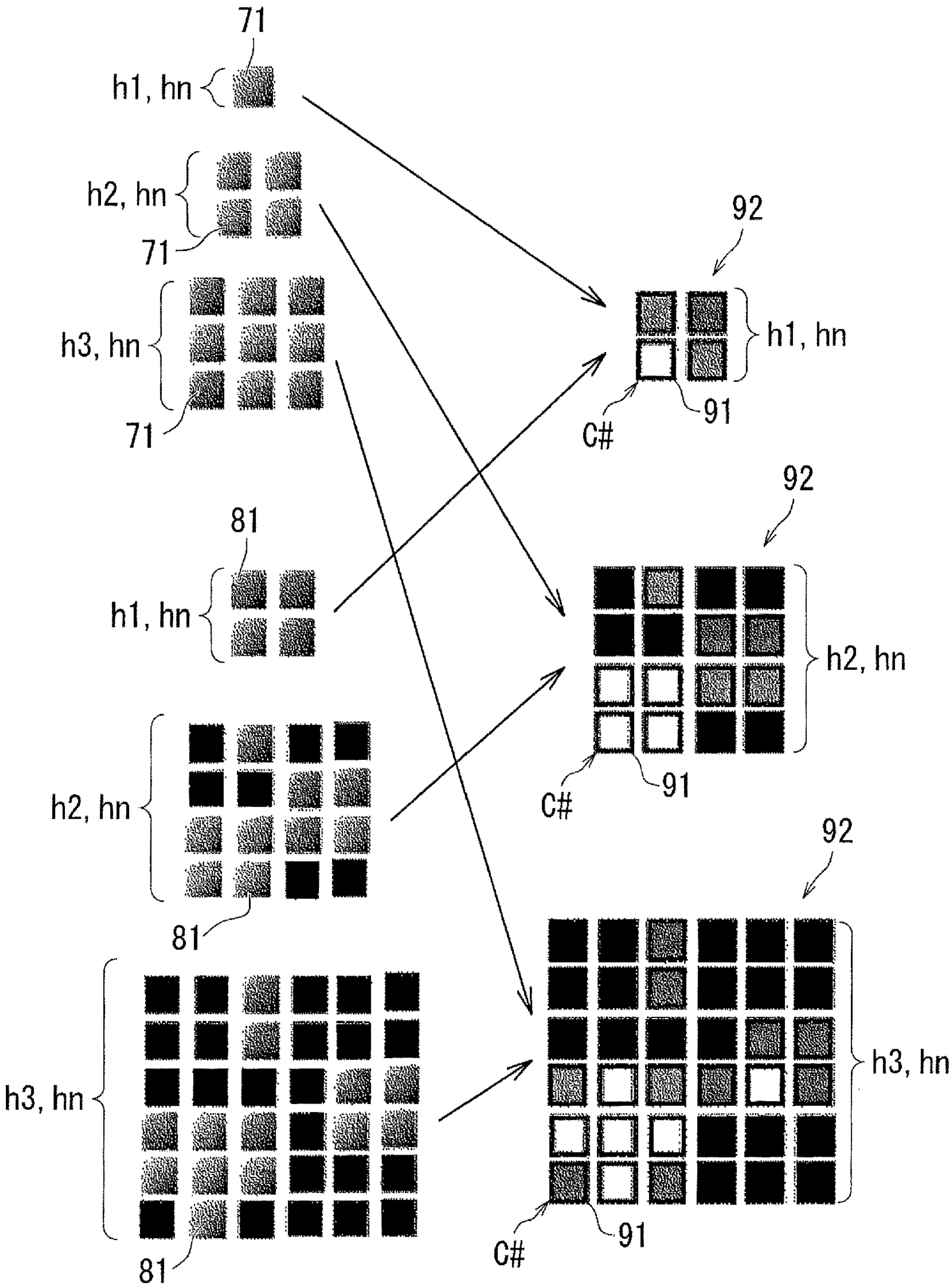
71
h1, hn
h2, hn
71
h3, hn
71
81
h1, hn
h2, hn
81
h3, hn
81
92
h1, hn
C#
91
92
h2, hn
C#
91
92
h3, hn
C#
91

FIG. 5

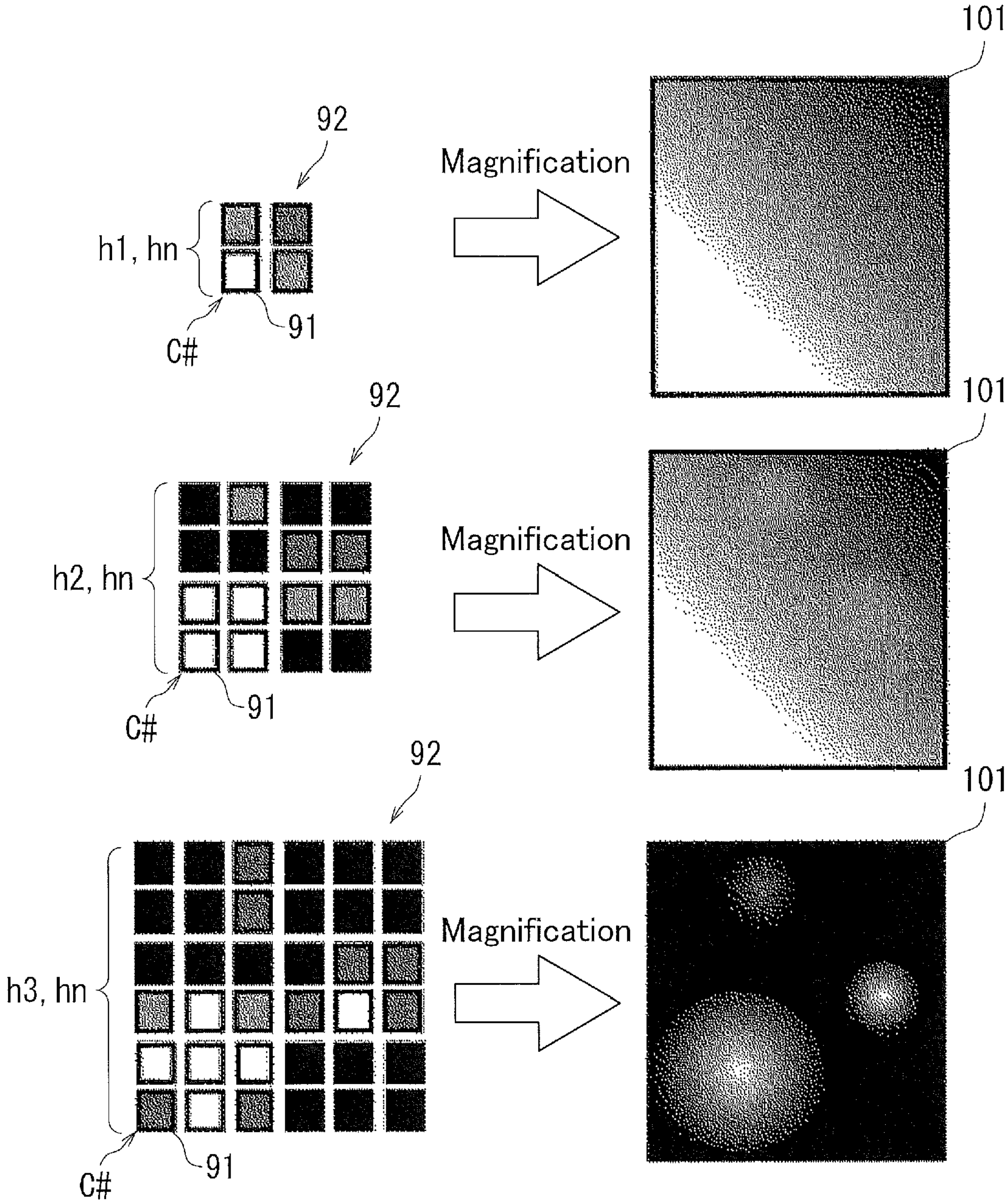
101
92
Magnification
h1, hn
91
C#
92
101
Magnification
h2, hn
91
C#
92
101
Magnification
h3, hn
91
C#

FIG. 6

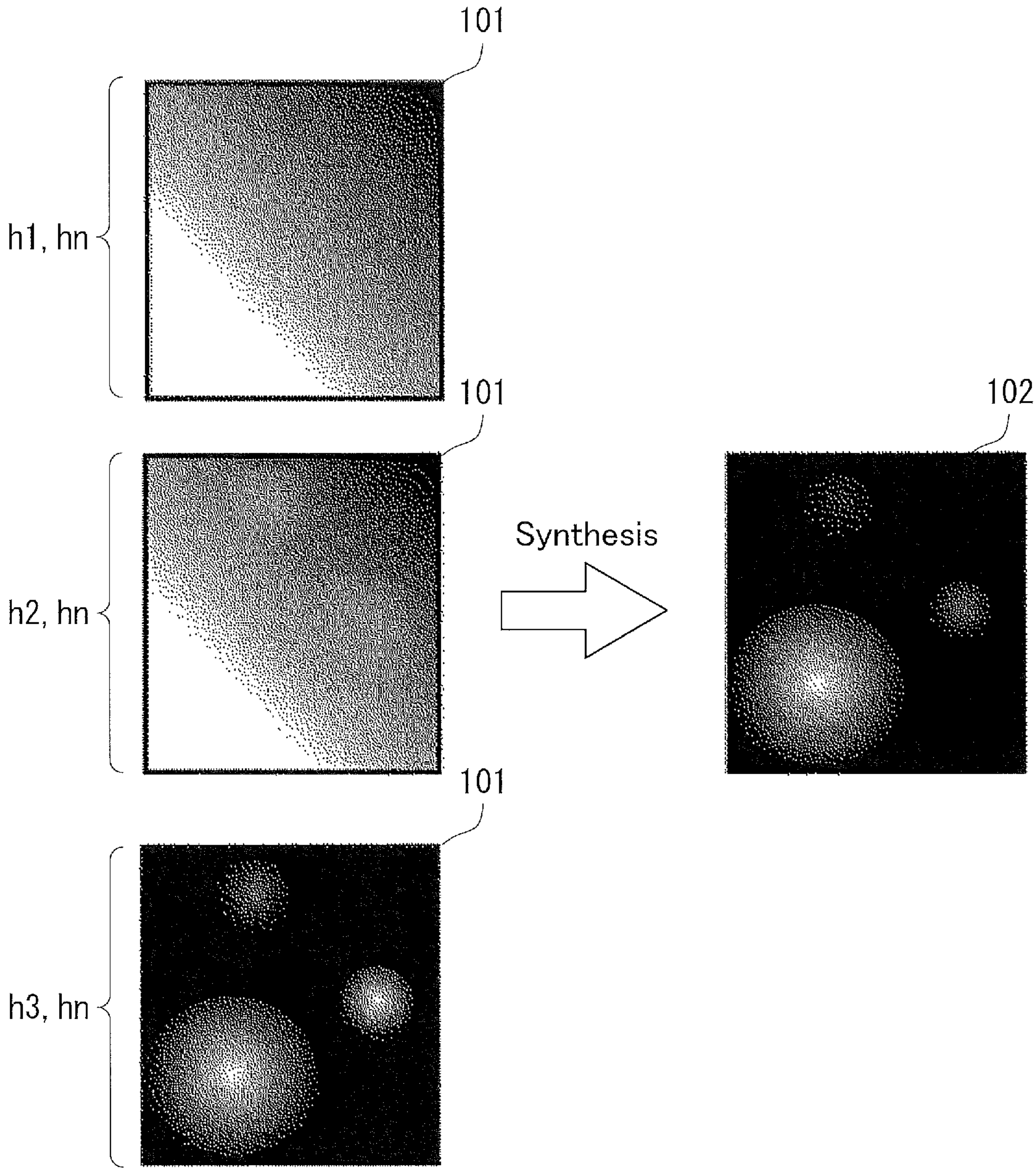

FIG. 7

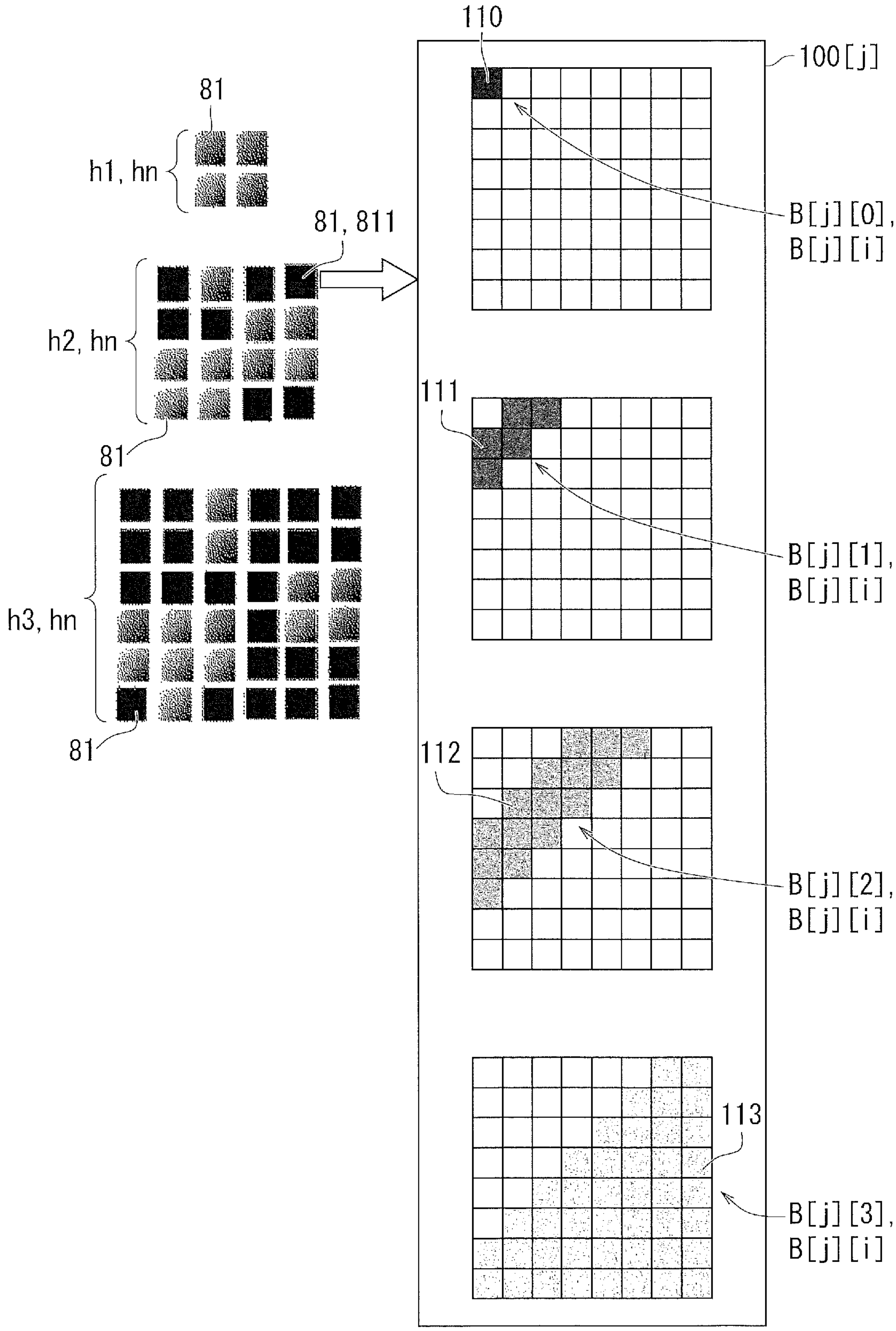

81
h1, hn
81, 811
h2, hn
81
h3, hn
81
110
100[j]
B[j][0],
B[j][i]
111
B[j][1],
B[j][i]
112
B[j][2],
B[j][i]
113
B[j][3],
B[j][i]

FIG. 8

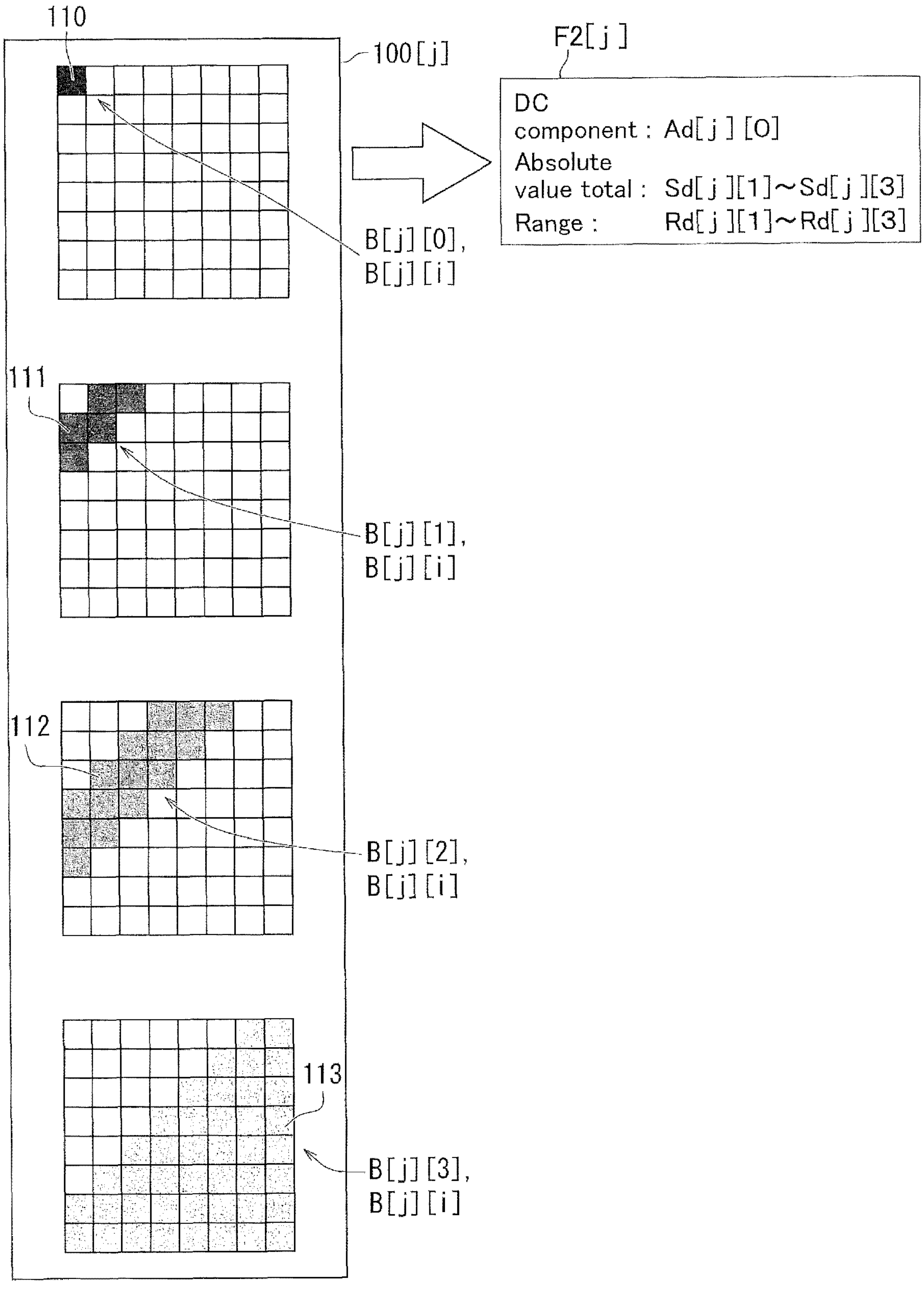
110
100[j]
F2[j]
DC
component : Ad[j][0]
Absolute
value total : Sd[j][1]~Sd[j][3]
Range : Rd[j][1]~Rd[j][3]
B[j][0],
B[j][i]
111
B[j][1],
B[j][i]
112
B[j][2],
B[j][i]
113
B[j][3],
B[j][i]

FIG. 9

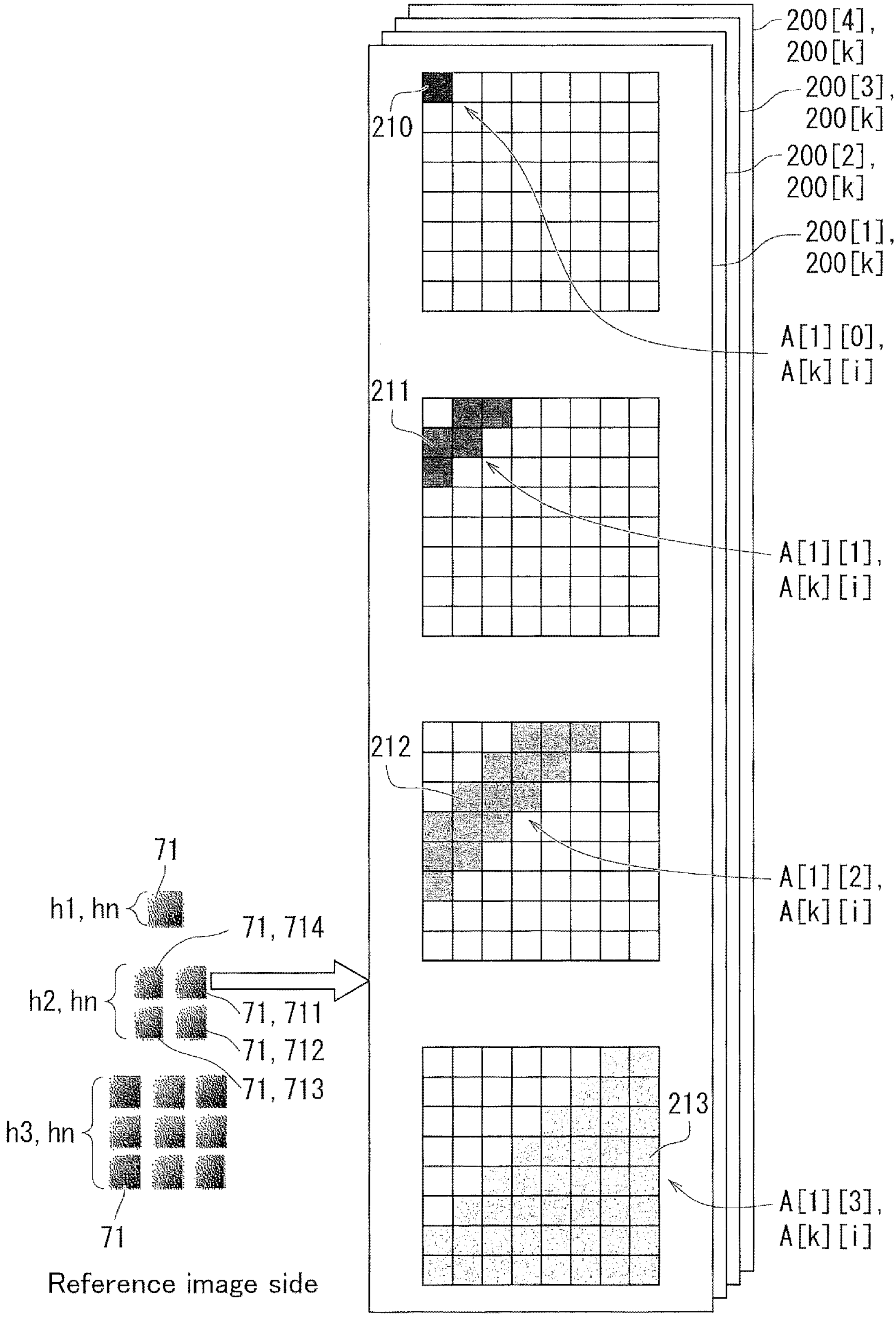
200[4], 200[k]
200[3], 200[k]
200[2], 200[k]
200[1], 200[k]
210
A[1][0], A[k][i]
211
A[1][1], A[k][i]
212
A[1][2], A[k][i]
213
A[1][3], A[k][i]
71
h1, hn
71, 714
h2, hn
71, 711
71, 712
71, 713
h3, hn
71
Reference image side

FIG. 10

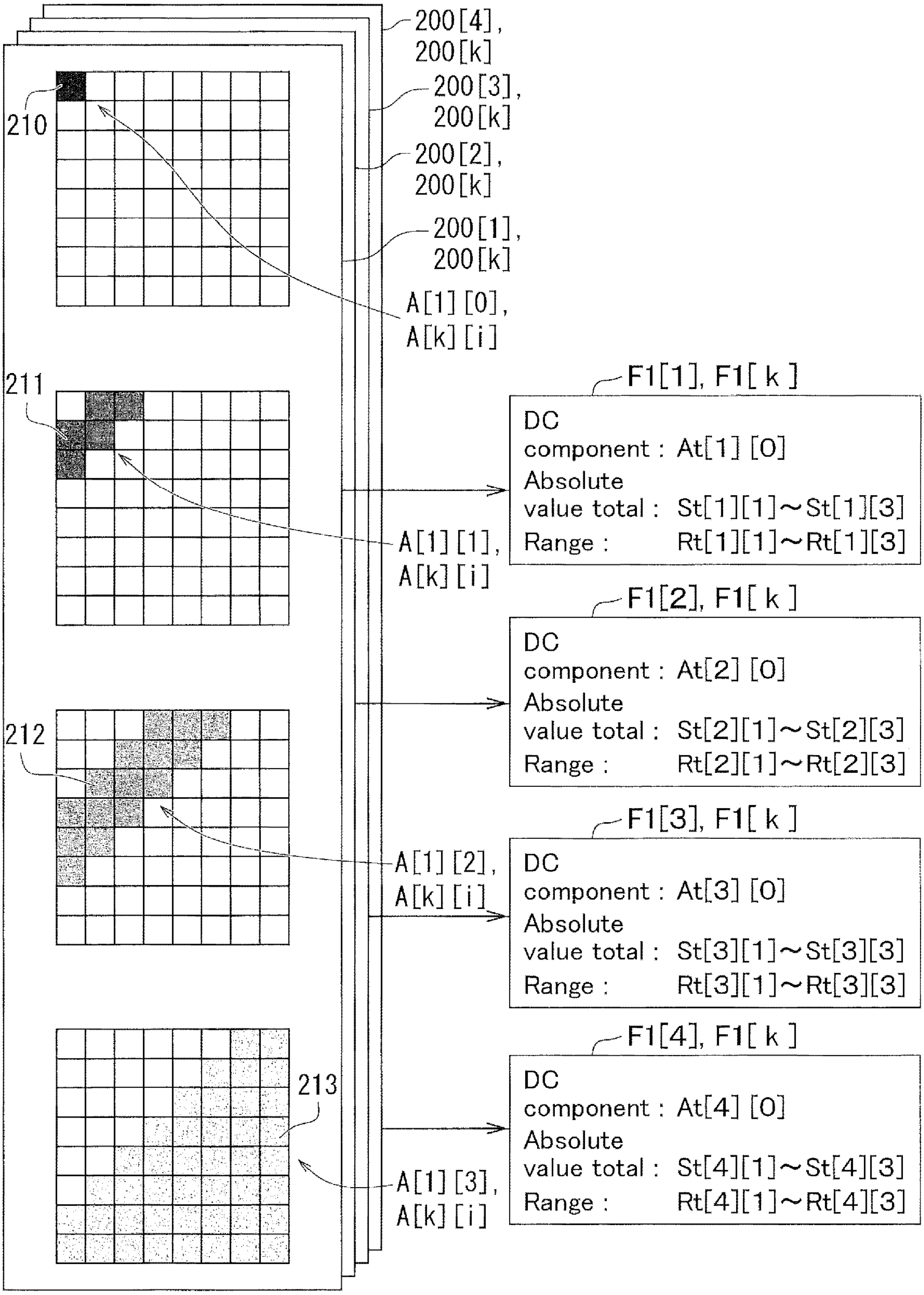
200[4],
200[k]
200[3],
200[k]
200[2],
200[k]
200[1],
200[k]
210
A[1][0],
A[k][i]
211
A[1][1],
A[k][i]
212
A[1][2],
A[k][i]
213
A[1][3],
A[k][i]
F1[1], F1[k]
DC
component : At[1] [0]
Absolute
value total : St[1][1]~St[1][3]
Range : Rt[1][1]~Rt[1][3]
F1[2], F1[k]
DC
component : At[2] [0]
Absolute
value total : St[2][1]~St[2][3]
Range : Rt[2][1]~Rt[2][3]
F1[3], F1[k]
DC
component : At[3] [0]
Absolute
value total : St[3][1]~St[3][3]
Range : Rt[3][1]~Rt[3][3]
F1[4], F1[k]
DC
component : At[4] [0]
Absolute
value total : St[4][1]~St[4][3]
Range : Rt[4][1]~Rt[4][3]

FIG. 11

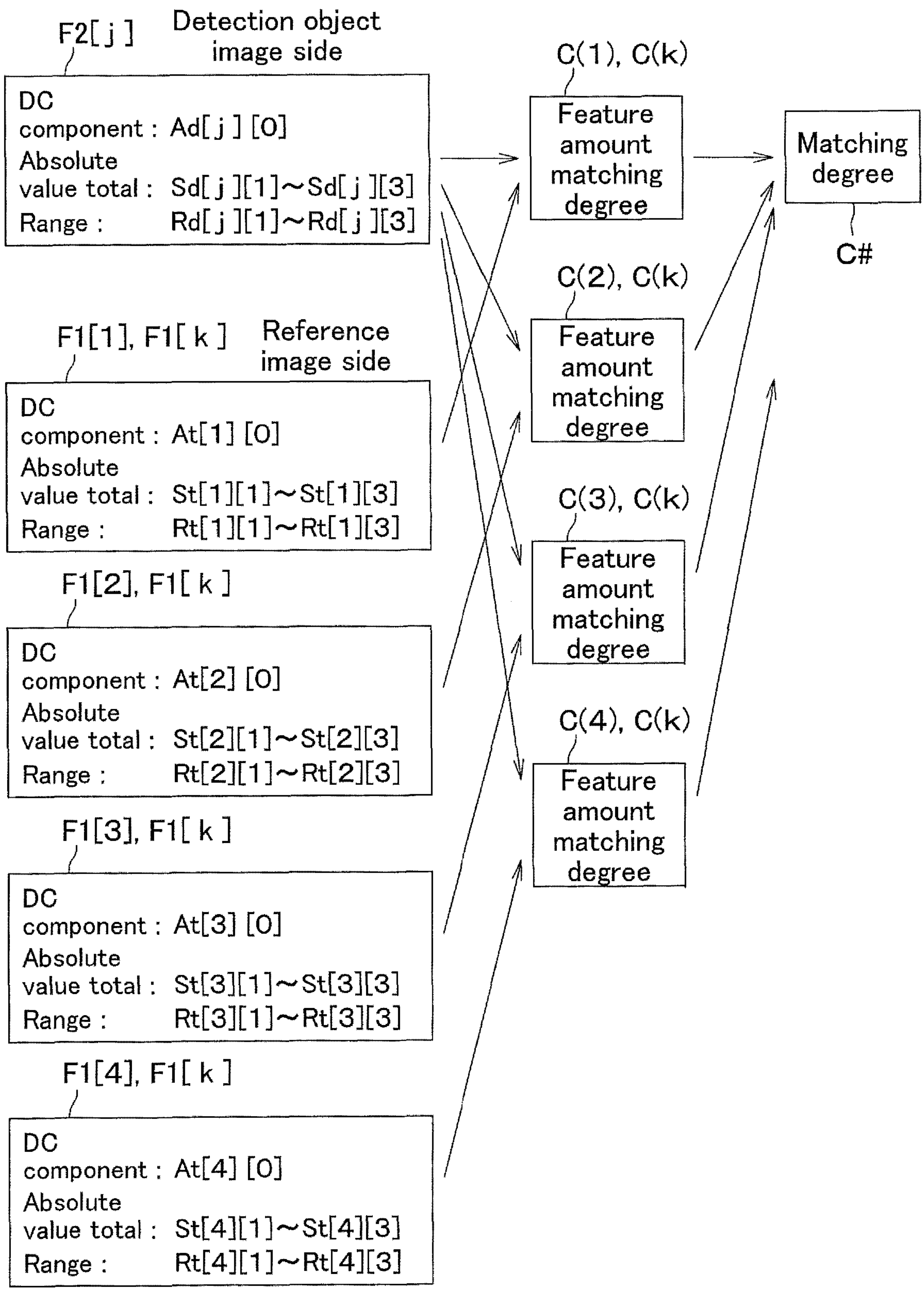
F2[ j ]
Detection object image side
DC component : Ad[ j ] [0]
Absolute value total : Sd[ j ][1]~Sd[ j ][3]
Range : Rd[ j ][1]~Rd[ j ][3]
F1[1], F1[ k ]
Reference image side
DC component : At[1] [0]
Absolute value total : St[1][1]~St[1][3]
Range : Rt[1][1]~Rt[1][3]
F1[2], F1[ k ]
DC component : At[2] [0]
Absolute value total : St[2][1]~St[2][3]
Range : Rt[2][1]~Rt[2][3]
F1[3], F1[ k ]
DC component : At[3] [0]
Absolute value total : St[3][1]~St[3][3]
Range : Rt[3][1]~Rt[3][3]
F1[4], F1[ k ]
DC component : At[4] [0]
Absolute value total : St[4][1]~St[4][3]
Range : Rt[4][1]~Rt[4][3]
C(1), C(k)
Feature amount matching degree
C(2), C(k)
Feature amount matching degree
C(3), C(k)
Feature amount matching degree
C(4), C(k)
Feature amount matching degree
Matching degree
C#

FIG. 12

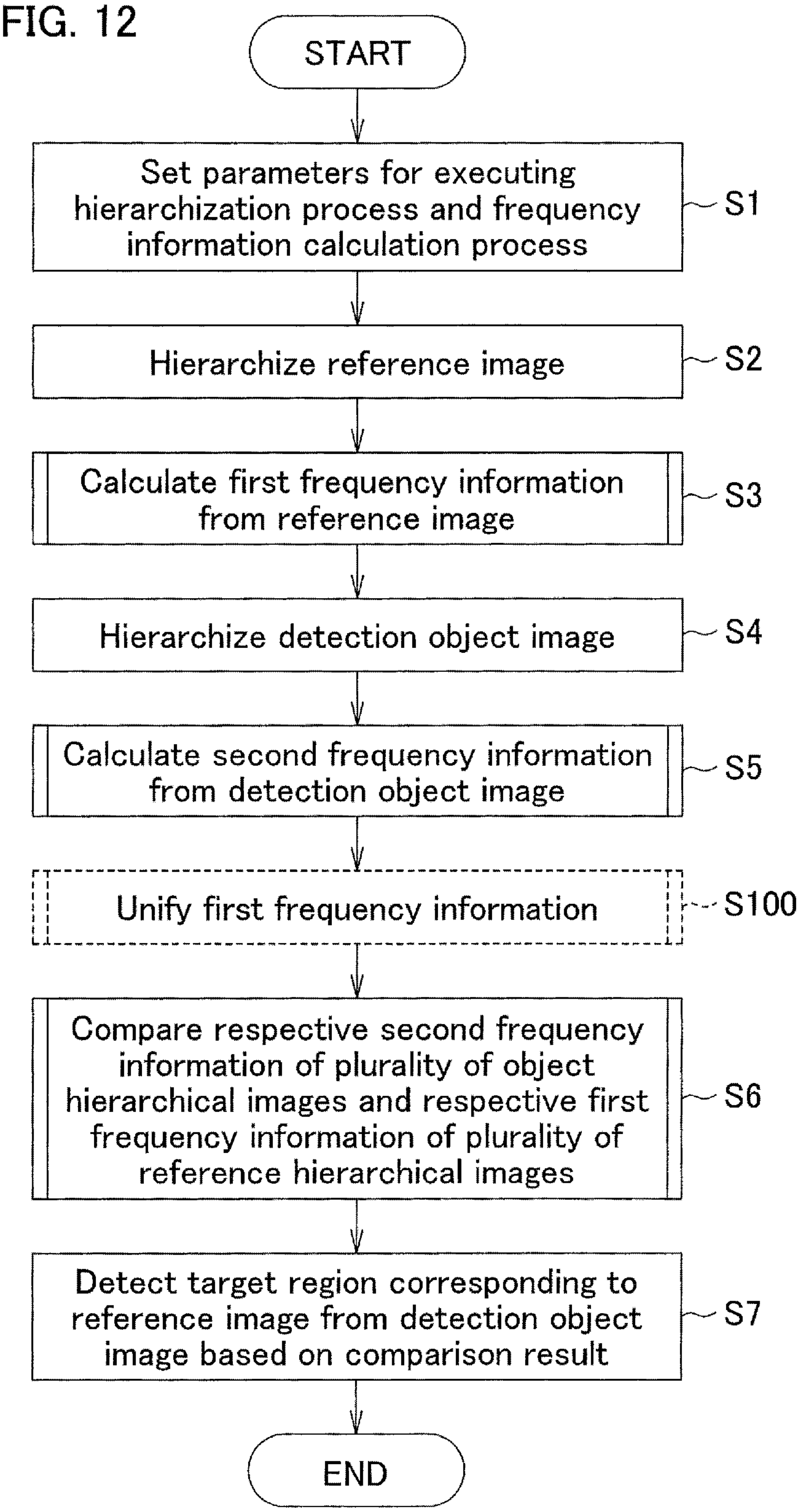
START
Set parameters for executing hierarchization process and frequency information calculation process
S1
Hierarchize reference image
S2
Calculate first frequency information from reference image
S3
Hierarchize detection object image
S4
Calculate second frequency information from detection object image
S5
Unify first frequency information
S100
Compare respective second frequency information of plurality of object hierarchical images and respective first frequency information of plurality of reference hierarchical images
S6
Detect target region corresponding to reference image from detection object image based on comparison result
S7
END

FIG. 13

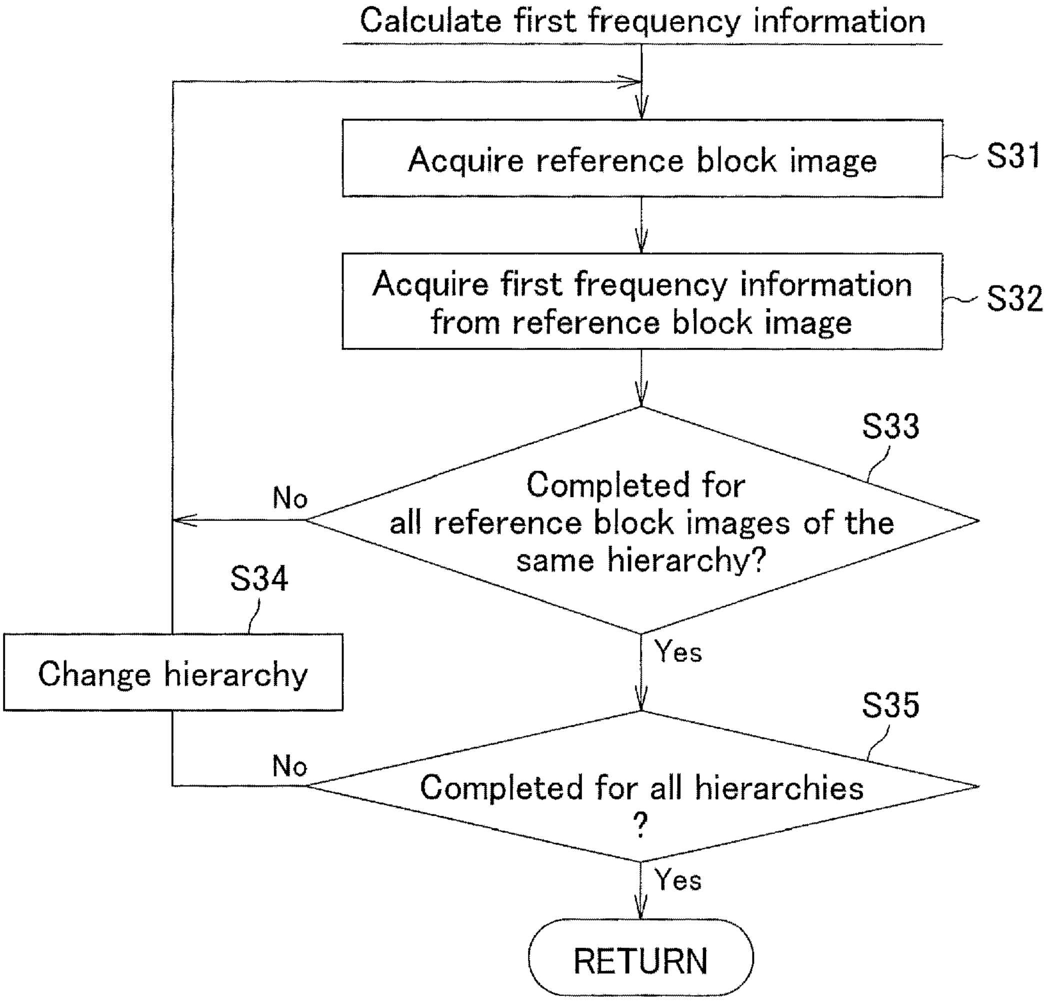
Calculate first frequency information
Acquire reference block image
S31
Acquire first frequency information from reference block image
S32
Completed for all reference block images of the same hierarchy?
S33
No
Yes
S34
Change hierarchy
Completed for all hierarchies ?
S35
No
Yes
RETURN

FIG. 14

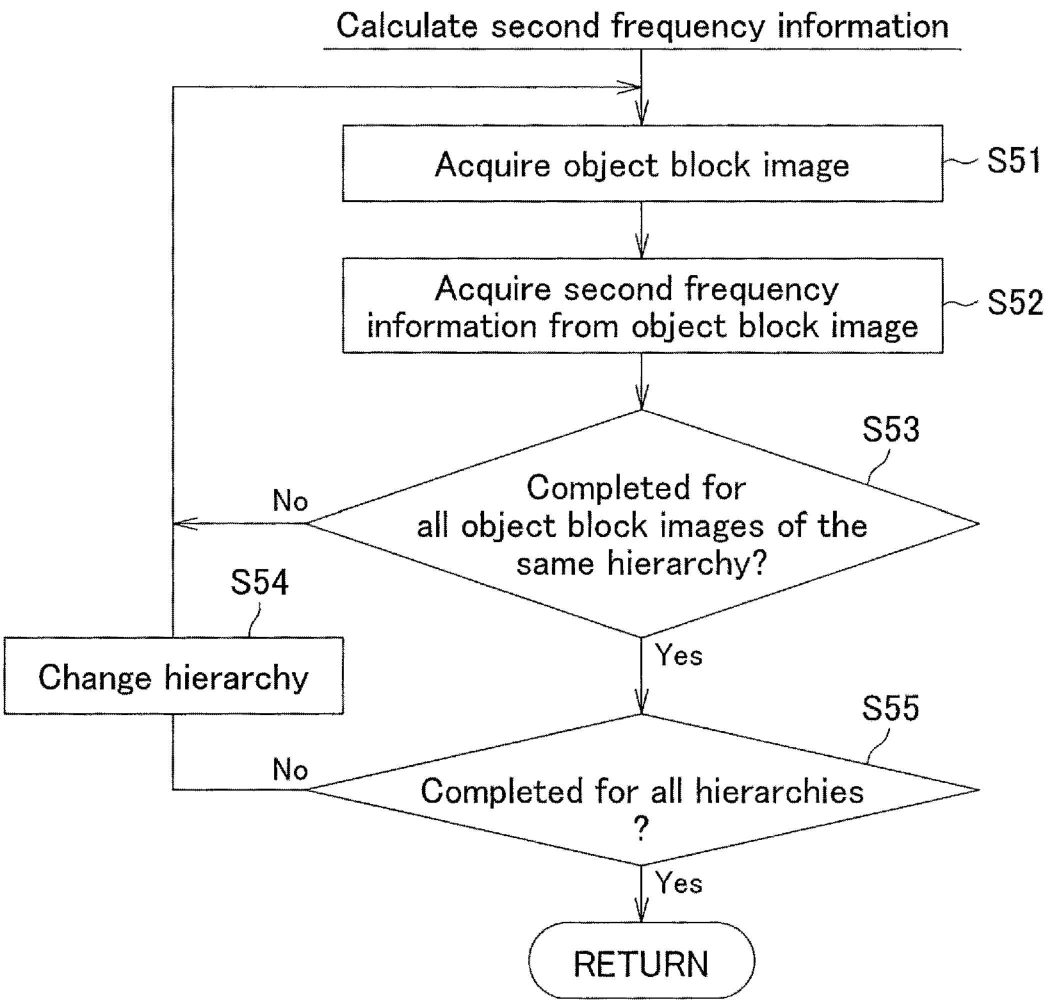
Calculate second frequency information
Acquire object block image
S51
Acquire second frequency information from object block image
S52
Completed for all object block images of the same hierarchy?
S53
No
Yes
S54
Change hierarchy
Completed for all hierarchies ?
S55
No
Yes
RETURN

FIG. 15

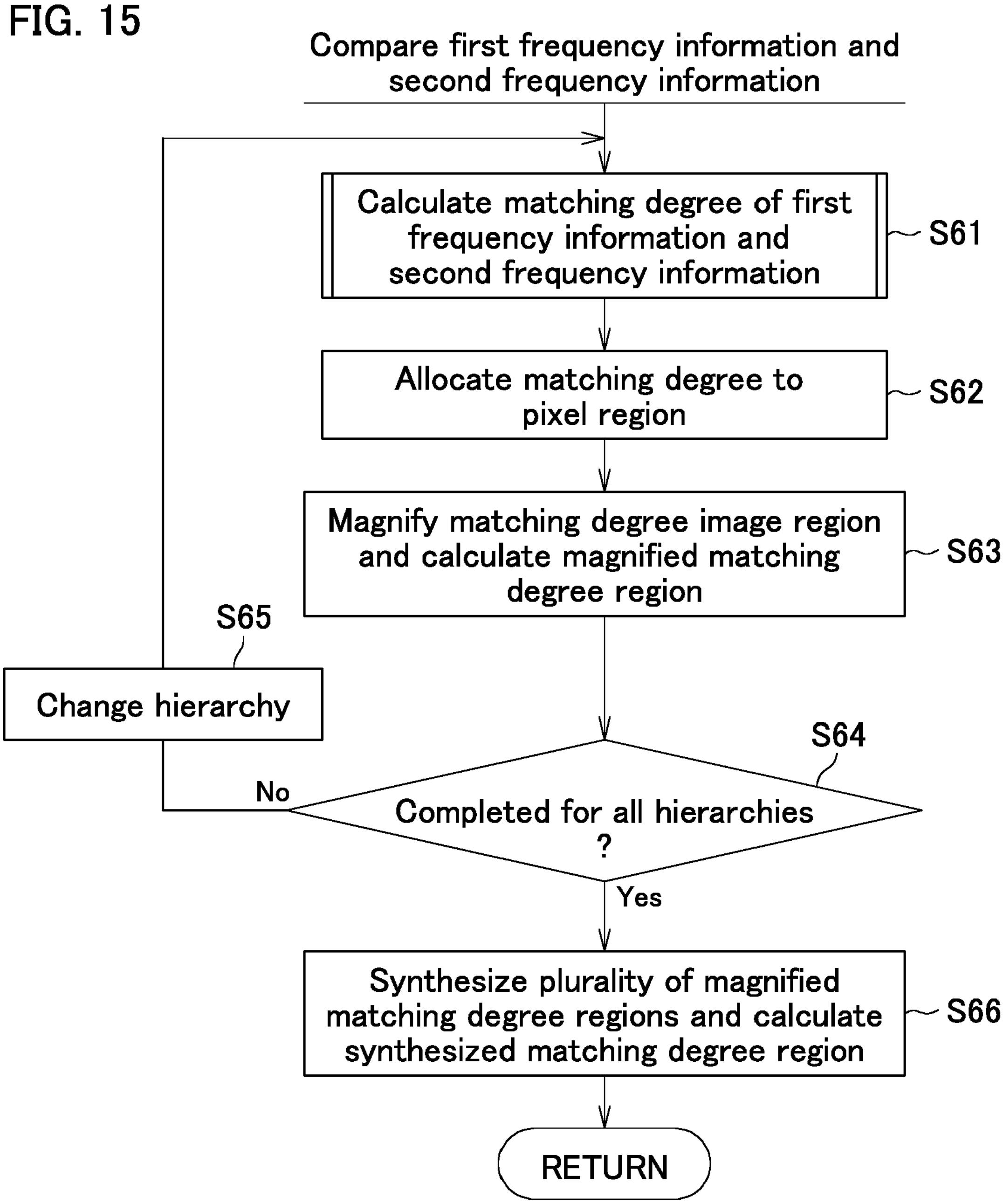
Compare first frequency information and second frequency information
Calculate matching degree of first frequency information and second frequency information
S61
Allocate matching degree to pixel region
S62
Magnify matching degree image region and calculate magnified matching degree region
S63
S65
Change hierarchy
S64
No
Completed for all hierarchies ?
Yes
Synthesize plurality of magnified matching degree regions and calculate synthesized matching degree region
S66
RETURN

FIG. 16

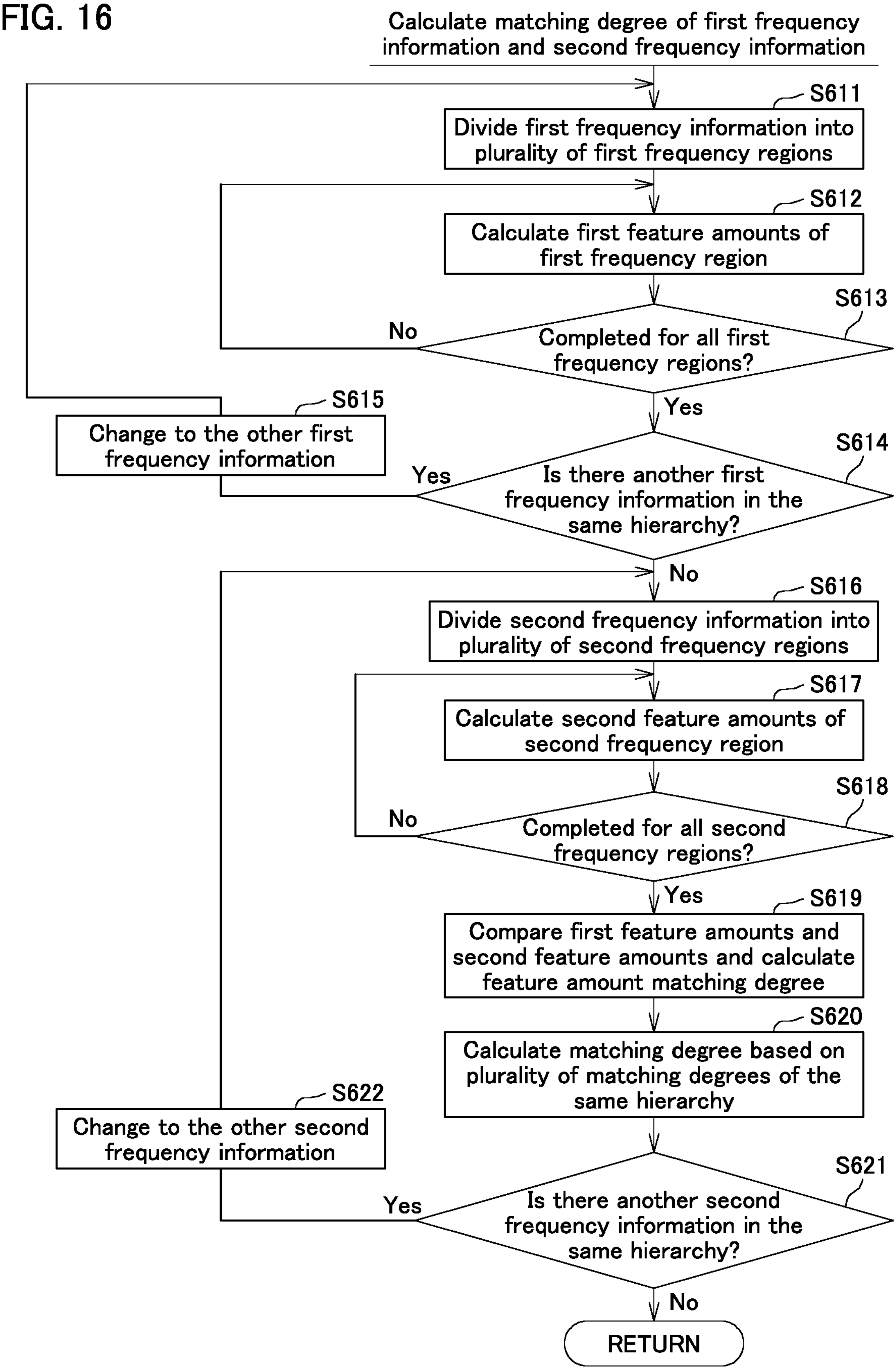
Calculate matching degree of first frequency information and second frequency information
S611
Divide first frequency information into plurality of first frequency regions
S612
Calculate first feature amounts of first frequency region
S613
Completed for all first frequency regions?
No
Yes
S614
Is there another first frequency information in the same hierarchy?
Yes
S615
Change to the other first frequency information
No
S616
Divide second frequency information into plurality of second frequency regions
S617
Calculate second feature amounts of second frequency region
S618
Completed for all second frequency regions?
No
Yes
S619
Compare first feature amounts and second feature amounts and calculate feature amount matching degree
S620
Calculate matching degree based on plurality of matching degrees of the same hierarchy
S621
Is there another second frequency information in the same hierarchy?
Yes
S622
Change to the other second frequency information
No
RETURN

FIG. 17(a)

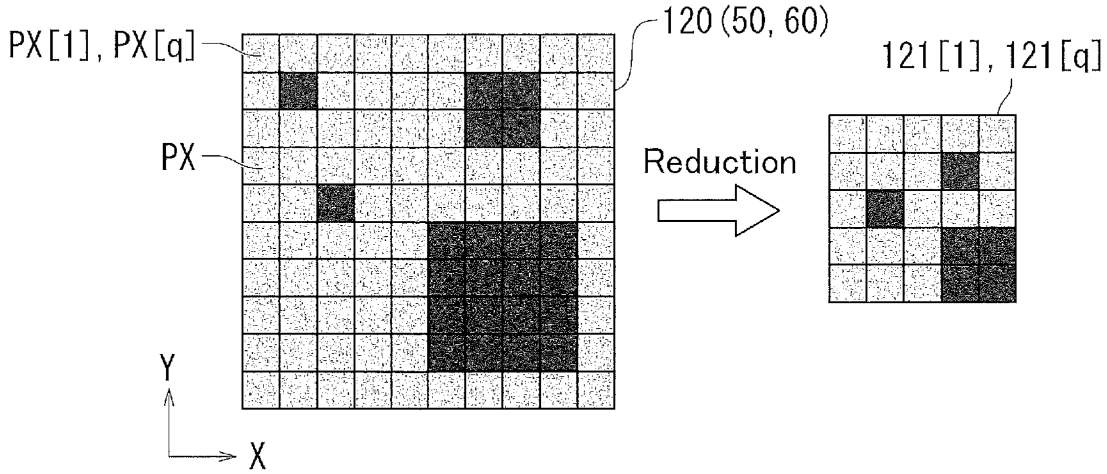


FIG. 17(b)

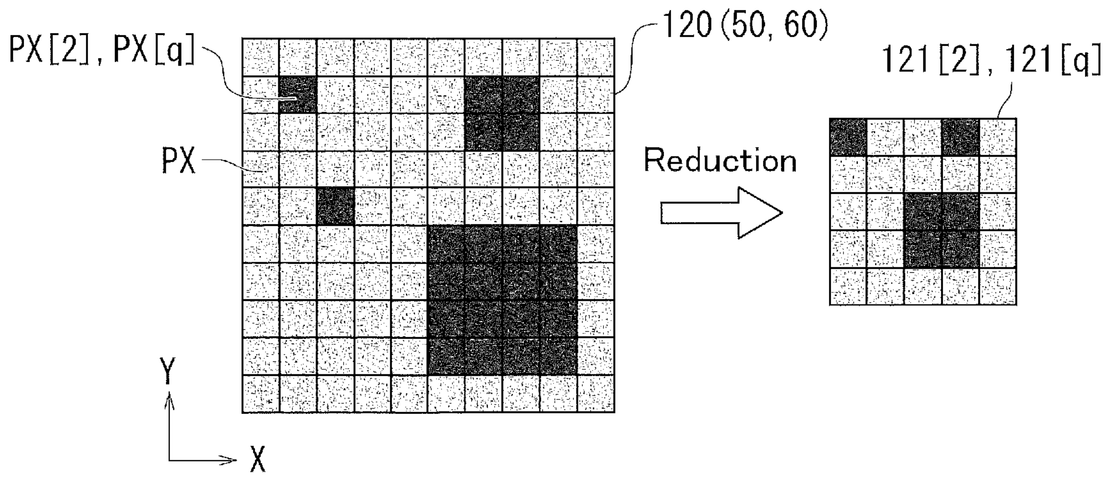

FIG. 18(a)

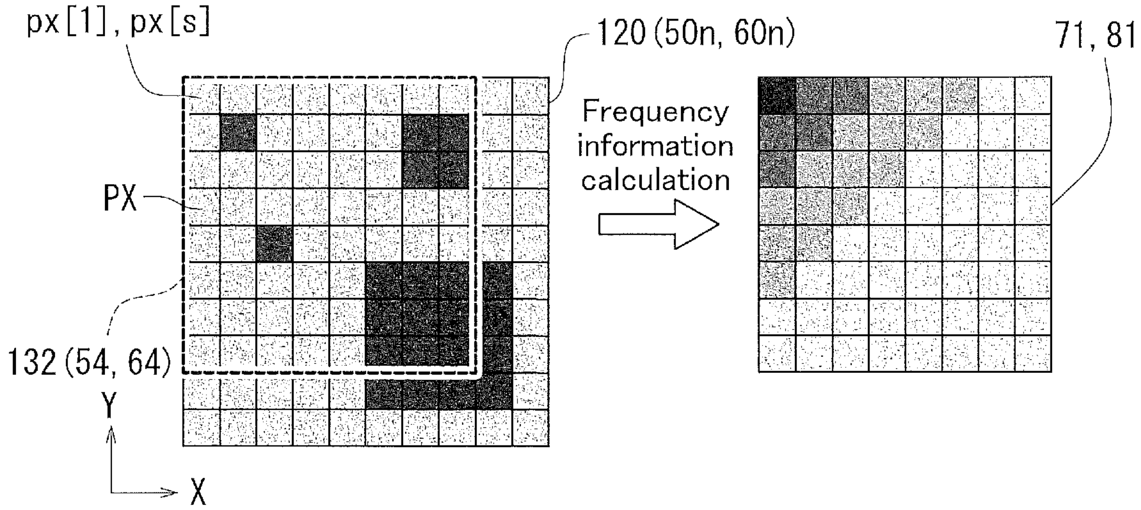


FIG. 18(b)

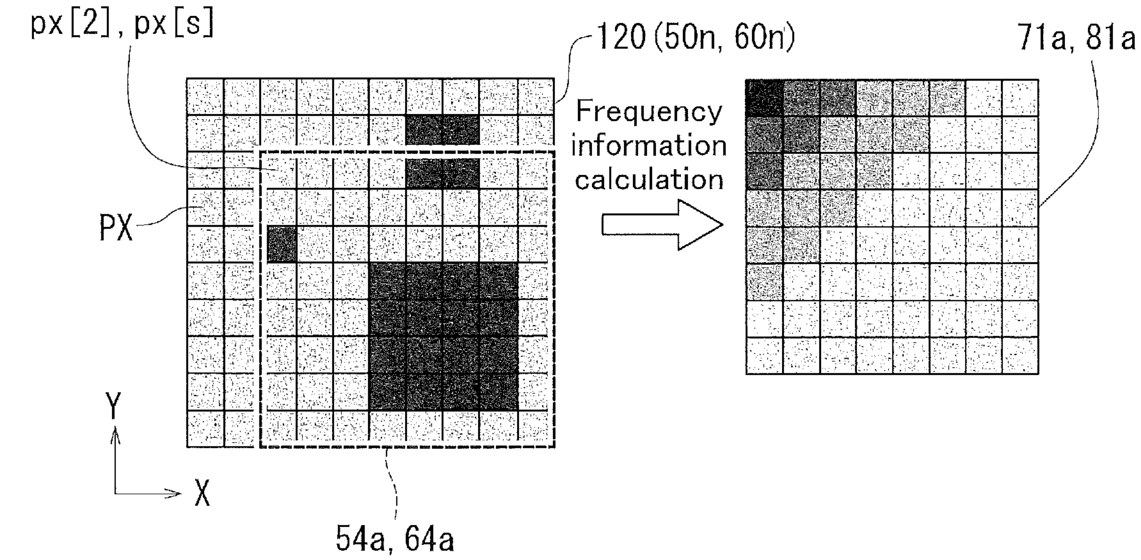

FIG. 19

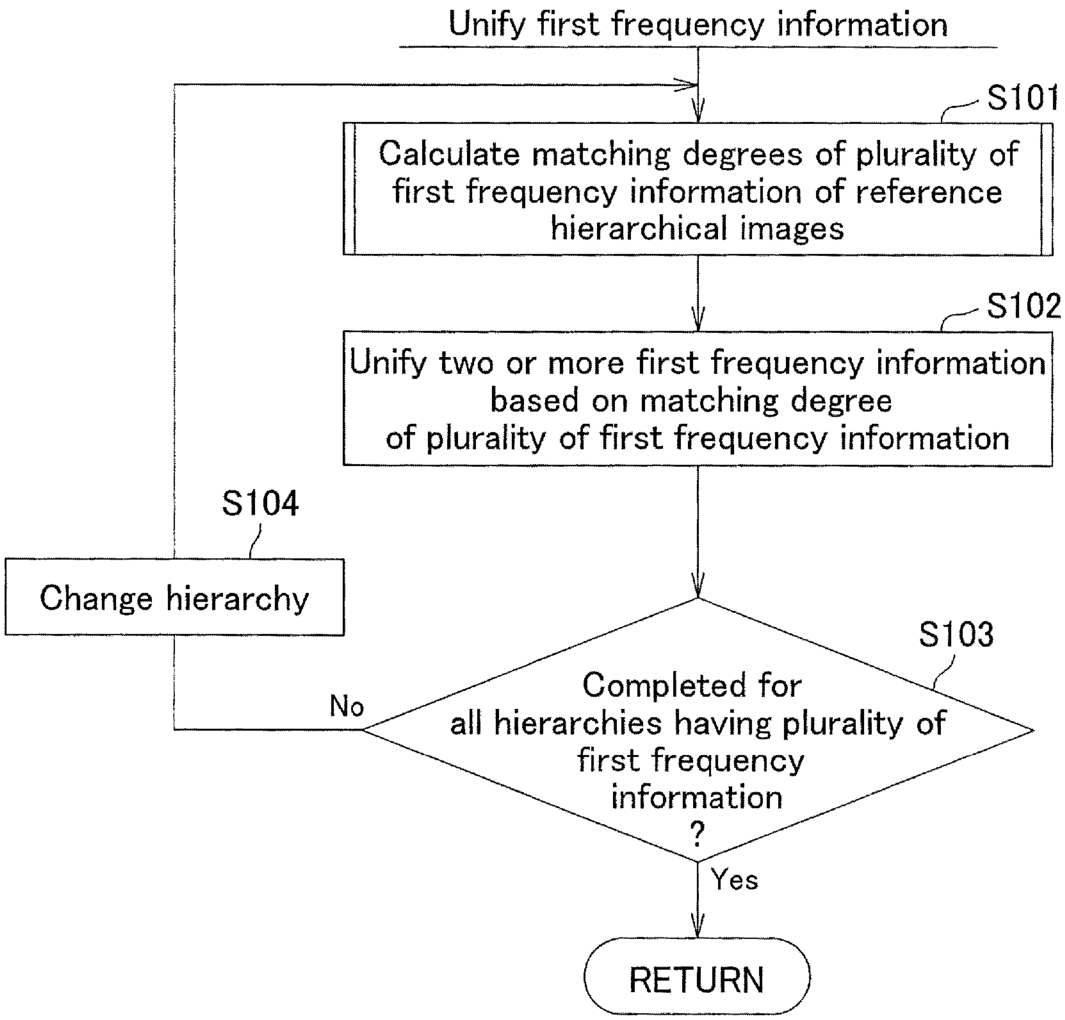
Unify first frequency information
S101
Calculate matching degrees of plurality of first frequency information of reference hierarchical images
S102
Unify two or more first frequency information based on matching degree of plurality of first frequency information
S103
Completed for all hierarchies having plurality of first frequency information ?
No
Yes
S104
Change hierarchy
RETURN

FIG. 20

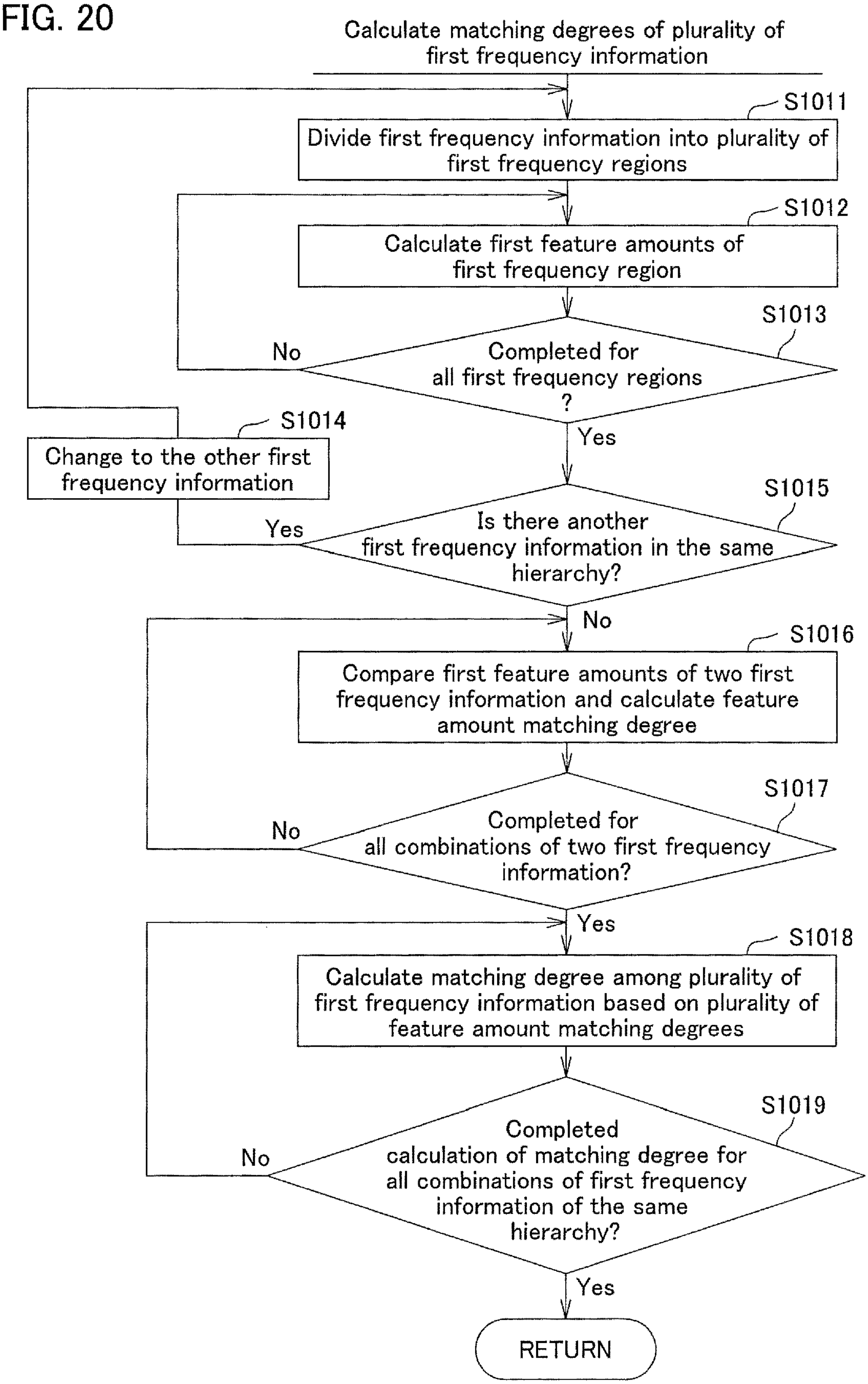
Calculate matching degrees of plurality of first frequency information
S1011
Divide first frequency information into plurality of first frequency regions
S1012
Calculate first feature amounts of first frequency region
S1013
Completed for all first frequency regions ?
No
Yes
S1014
Change to the other first frequency information
S1015
Is there another first frequency information in the same hierarchy?
Yes
No
S1016
Compare first feature amounts of two first frequency information and calculate feature amount matching degree
S1017
Completed for all combinations of two first frequency information?
No
Yes
S1018
Calculate matching degree among plurality of first frequency information based on plurality of feature amount matching degrees
S1019
Completed calculation of matching degree for all combinations of first frequency information of the same hierarchy?
No
Yes
RETURN

Europäisches Patentamt
European Patent Office
Office européen des brevets

# EUROPEAN SEARCH REPORT

Application Number
EP 25 16 3157

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>A | Varish Naushad ET AL: "A Novel Similarity Measure for Content Based Image Retrieval in Discrete Cosine Transform Domain" In: "Fundamenta Informaticae 156", 31 October 2017 (2017-10-31), XP093298091, pages 209-235, DOI: 10.3233/FI-2017-1605, Retrieved from the Internet: URL:https://journals.sagepub.com/doi/10.3233/FI-2017-1605><br>* sections 3.2, 3.3, 4.1, 4.3; figures 3-5 * | 1-3,8-13<br><br>4-7 | INV. G06V10/42 |
| A | VARISH NAUSHAD: "A modified similarity measurement for image retrieval scheme using fusion of color, texture and shape moments", MULTIMEDIA TOOLS AND APPLICATIONS, KLUWER ACADEMIC PUBLISHERS, BOSTON, US, vol. 81, no. 15, 11 March 2022 (2022-03-11), pages 20373-20405, XP037854143, ISSN: 1380-7501, DOI: 10.1007/S11042-022-12289-1 [retrieved on 2022-03-11]<br>* sections 2.1, 2.3, 3.3; figure 4 * | 1-13 | TECHNICAL FIELDS SEARCHED (IPC)<br>G06V |
| A | US 5 940 824 A (TAKAHASHI KOJI [JP]) 17 August 1999 (1999-08-17)<br>* the whole document * | 1-13 | |

The present search report has been drawn up for all claims

1

| Place of search | Date of completion of the search | Examiner |
|---|---|---|
| The Hague | 22 July 2025 | Lepetit, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 25 16 3157

This annex lists the patent family members relating to the patent documents cited in the above-mentioned European search report. The members are as contained in the European Patent Office EDP file on
The European Patent Office is in no way liable for these particulars which are merely given for the purpose of information.

22-07-2025

| Patent document cited in search report | Publication date | Patent family member(s) | Publication date |
|---|---|---|---|
| US 5940824 A | 17-08-1999 | JP 3720412 B2 | 30-11-2005 |
| | | JP H08305718 A | 22-11-1996 |
| | | US 5940824 A | 17-08-1999 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2008139825 A
- JP 2024048436 A